(19) Europäisches Patentamt
European Patent Office
Office européen des brevets

(11) **EP 0 755 014 A1**

(12) **DEMANDE DE BREVET EUROPEEN**

(43) Date de publication:
**22.01.1997 Bulletin 1997/04**

(51) Int Cl.$^6$: **G06F 15/16**

(21) Numéro de dépôt: **96401528.3**

(22) Date de dépôt: **10.07.1996**

(84) Etats contractants désignés:
**DE FR GB IT**

(30) Priorité: **21.07.1995 FR 9508848**

(71) Demandeur: **BULL S.A.**
**78430 Louveciennes (FR)**

(72) Inventeurs:
• **Boudou, Alain**
**78930 Vert (FR)**

• **Gressus, Yvon**
**78340 Les Clayes sous Bois (FR)**

(74) Mandataire: **Denis, Hervé et al**
**Direction de la Propriété Intellectuelle BULL SA,**
**Poste courrier: LV59C18,**
**68 route de Versailles**
**78430 Louveciennes (FR)**

(54) **Procédé de transfert de données dans un système informatique multinodal**

(57) Dans le système informatique multinodal (SYS), chaque noeud (Nx) comprend au moins un processeur (Pxm) pourvu d'une antémémoire (CMxm), une mémoire (Mx), un bus système (SBx) et un module de communication (ISLx) avec un autre noeud (Ny). Le procédé de transfert internodal de données utilise un mécanisme du protocole de cohérence (MESI) des mémoires des noeuds. Ce mécanisme est avantageusement l'état modifié "M" du protocole.

Fig. 1

**Description**

Domaine technique de l'invention.

L'invention a pour objet un procédé de transfert de données entre des systèmes informatiques distants appelés noeuds, interconnectés entre eux par des liaisons de transmission électrique ou optique pour constituer un système informatique multinodal.

L'invention est particulièrement adaptée aux systèmes informatiques multinodaux, dont les noeuds exécutent chacun leur propre système d'exploitation et/ou possèdent chacun plusieurs processeurs constitutifs des systèmes multinodaux multiprocesseurs et/ou les liaisons sont dédiées à la communication entre ces noeuds. Les liaisons peuvent véhiculer les messages soit sous forme de trains de bits en série (liaisons sérielles) soit sous la forme de tranches successives de bits disposés en parallèle (liaisons parallèles).

Elle a aussi pour objets corollaires un système informatique multinodal mettant en oeuvre le procédé et un circuit intégré pour la mise en oeuvre du procédé ou du système informatique.

L'art antérieur.

Dans un système informatique multiprocesseur multinodal, chaque noeud comprend ordinairement plusieurs processeurs pourvus d'antémémoires respectives connectées par l'intermédiaire d'un bus système à une mémoire et à un module de communication internodale. Les données traitées par les processeurs du système se trouvent réparties à chaque instant dans toutes les mémoires (mémoires et antémémoires) des noeuds. On supposera par exemple qu'à un instant donné un ou des processeurs de chaque noeud ont besoin de données se trouvant dans d'autres noeuds. Des requêtes et des procédures de transmission sont alors exécutées pour fournir ces données aux antémémoires des processeurs qui les ont demandées, par l'intermédiaire des liaisons de transmission internodales, des modules de communication et des bus systèmes des noeuds concernés. Les données sont ensuite traitées par ces processeurs et certaines d'entre elles sont modifiées. A cet instant, les données se trouvent donc réparties dans tout le système de façon différente par rapport à l'instant précédemment considéré.

On comprend donc que le transfert des données entre noeuds du système pose un problème très complexe et très difficile à résoudre simplement. Ce problème se complique beaucoup plus quand chaque noeud a son propre système d'exploitation. D'abord, la présence de systèmes d'exploitation différents ne permet plus à chaque noeud d'avoir une visibilité sur les adresses des données des autres noeuds. De plus, les requêtes formulées dans un noeud deviennent incompréhensibles pour les autres noeuds. Le transfert des données devient donc plus compliqué, plus coûteux et plus lourd à mettre en oeuvre. Ensuite, la présence de différents systèmes d'exploitation requiert actuellement l'emploi de protocoles sophistiqués pour la transmission internodale des données et ralentit encore plus leur transmission.

Dans un système classique, quand un premier noeud communique avec un second noeud, il ne peut pas communiquer avec un troisième noeud en même temps, le second noeud ne peut communiquer avec le premier noeud et un troisième noeud ne peut communiquer ni avec le premier ni avec le second noeud. Cette limitation ralentit donc beaucoup la puissance de traitement du système lorsqu'il faut transférer des données entre plusieurs noeuds.

La présence de plusieurs processeurs dans chaque noeud accentue encore le problème. A un instant donné, des processeurs d'un noeud et même tous les processeurs du noeud peuvent être impliqués dans différentes procédures respectives d'exécution de requêtes de transfert de données qui se trouvent dans d'autres noeuds. Toutes ces procédures devraient donc se faire en parallèle, c'est-à-dire indépendamment les unes des autres. Ceci exige actuellement une forte capacité de traitement du module de communication internodale du noeud.

Ce problème est aggravé par la bidirectionnalité souhaitable de la transmission entre noeuds. Dans ce cas en effet, le module de communication d'un noeud peut être impliqué en même temps dans des procédures d'exécution de requêtes internes au noeud et dans des procédures d'exécution de requêtes extérieures au noeud pour le transfert de données se trouvant dans ce noeud.

Un autre problème se pose pour le transfert de messages de taille variable, non définie. Les performances d'un système sont définies notamment par le surcoût de traitement (overhead), le débit et la latence, qui se définit par le rapport entre, d'une part, la somme du surcoût et de la taille des messages et, d'autre part, le débit. Dans un système classique, le débit est faible et la latence est importante pour des messages de tailles réduites.

Encore un autre problème apparaît dans certains systèmes classiques où l'émetteur contrôle le flux de transmission. Ces systèmes sont appelés systèmes à poussée de données (data push). Dans ces systèmes, l'émetteur n'a pas de visibilité sur la capacité de réception des données qu'il envoie, de sorte que l'arrivée des données au récepteur risque de provoquer l'engorgement du récepteur. En fait, le récepteur ne peut pas contrôler de façon simple le flux des données qu'il reçoit et est obligé d'exécuter tous les messages qu'il reçoit ou de perdre des messages. Une solution au problème posé par une différence entre le flux des données reçues et la vitesse de stockage en mémoire de ces données consiste à stocker transitoirement des données dans un tampon intermédiaire. Cependant, cette solution diminue les performances du récepteur.

Un problème apparaît aussi dans d'autres systèmes classiques, où un noeud émetteur envoie des données à un noeud récepteur pour les écrire dans la mémoire de ce noeud à une adresse désignée par l'émetteur. Dans ce cas, une erreur d'adresse faite par le noeud émetteur peut provoquer une corruption irrémédiable des données appartenant en propre au noeud distant.

L'invention.

Un but de l'invention est de simplifier notablement le logiciel et le matériel nécessaires au transfert internodal des données dans un système informatique dont les noeuds peuvent avoir des systèmes d'exploitation différents.

Un autre but de l'invention est d'accroître notablement la rapidité d'exécution du transfert de ces données, quelle que soit la nature de la transmission internodale et les systèmes d'exploitation des noeuds.

Un autre but de l'invention est de permettre simplement et efficacement l'exécution parallèle de requêtes de transfert internodal de données demandées par plusieurs processeurs d'un même noeud.

Un autre but de l'invention est de permettre simplement et efficacement l'exécution bidirectionnelle de requêtes de transfert internodal de données, et plus particulièrement dans le cas où s'ajoute une exécution parallèle de requêtes dans des noeuds multiprocesseurs.

Un autre but de l'invention est d'accroître notablement la latence du système informatique pour la transmission de messages courts.

Un autre but encore est de permettre au noeud récepteur de contrôler le flux de données qu'il reçoit afin de les traiter sans perte de données et sans diminution des performances du noeud récepteur.

Un autre but est d'assurer la protection des données stockées dans les mémoires des noeuds, en évitant qu'une erreur dans l'exécution d'une requête de transfert de données détruise d'autres données dans les mémoires.

L'invention a pour objet un procédé de transfert de données entre noeuds d'un système informatique, chaque noeud comprenant au moins un processeur pourvu d'une antémémoire, une mémoire, un bus système et un module de communication avec un autre noeud, la gestion des données dans chaque noeud se faisant selon un protocole de cohérence des mémoires du noeud, caractérisé en ce qu'il utilise un mécanisme de ce protocole pour le transfert des données d'un premier noeud dans un second noeud.

Il en résulte un système informatique comprenant des processeurs pourvus d'antémémoires respectives et répartis dans au moins deux noeuds comprenant chacun une mémoire, un bus système et un module de communication avec un autre noeud, caractérisé en ce que le module de communication met en oeuvre le procédé défini précédemment.

L'invention a pour objet corollaire un circuit intégré, caractérisé en ce qu'il incorpore un module de communication pour la mise en oeuvre du procédé défini précédemment.

Les caractéristiques et avantages de l'invention ressortent de la description qui suit, donnée à titre d'exemple et faite en référence aux dessins annexés.

Dans les dessins :

- la figure 1 est un schéma bloc illustrant la structure d'un système informatique multinodal conforme à l'invention ;
- la figure 2 est une vue schématique et partielle de la mémoire principale d'un noeud du système représenté sur la figure 1 ;
- la figure 3 est une vue schématique de la structure d'une adresse physique utilisée dans le système représenté sur la figure 1 et illustre une utilisation de telles adresses pour effectuer une lecture internodale de données selon le procédé de transfert de données décrit en référence à la figure 6 ;
- la figure 4 est une vue schématique d'une structure de l'espace d'adressage du système représenté sur la figure 1 ;
- la figure 5 est une vue schématique de la structure d'une adresse d'entrée-sortie programmée d'un registre mis en oeuvre dans le système représenté sur la figure 1 ;
- la figure 6 est un organigramme illustrant une forme de mise en oeuvre du procédé de transfert internodal de données dans le système représenté sur la figure 1;
- la figure 7 est une vue schématique de la structure d'une entrée d'une table de correspondance utilisée dans le procédé de transfert de données représenté sur la figure 6 ;
- la figure 8 est une vue schématique d'une structure des mémoires et des tables de correspondance de trois noeuds respectifs illustrant une forme de mise en oeuvre d'une étape du procédé de transfert de données représenté sur la figure 6 ;
- la figure 9 est une vue schématique et partielle de la structure d'un module de communication inclus dans chaque noeud du système représenté sur la figure 1 et illustre un circuit relatif à deux queues de messages utilisé par le procédé de transfert de messages décrit en référence à la figure 11;

- la figure 10 est une vue schématique de la structure d'un message utilisé dans le système représenté sur la figure 1 et par le procédé de transfert de messages décrit en référence à la figure 11 ;
- la figure 11 est une vue schématique et partielle de la structure de deux noeuds du système représenté sur la figure 1, indiquant des étapes d'un procédé de transfert de messages ;
- les figures 12 et 13 sont des organigrammes illustrant respectivement les étapes d'exécution d'une macro-instruction de mise en queue du message représenté sur la figure 10 et d'une macro-instruction de sortie du message d'une queue pour la mise en oeuvre du procédé de transfert de messages représenté sur la figure 11 ; et
- la figure 14 est un organigramme illustrant des étapes d'un procédé de communication de données par transfert de messages, utilisant le procédé de transfert de données décrit en référence à la figure 6 et le procédé de transfert de messages décrit en référence à la figure 11.

## 1. Présentation préliminaire et définitions

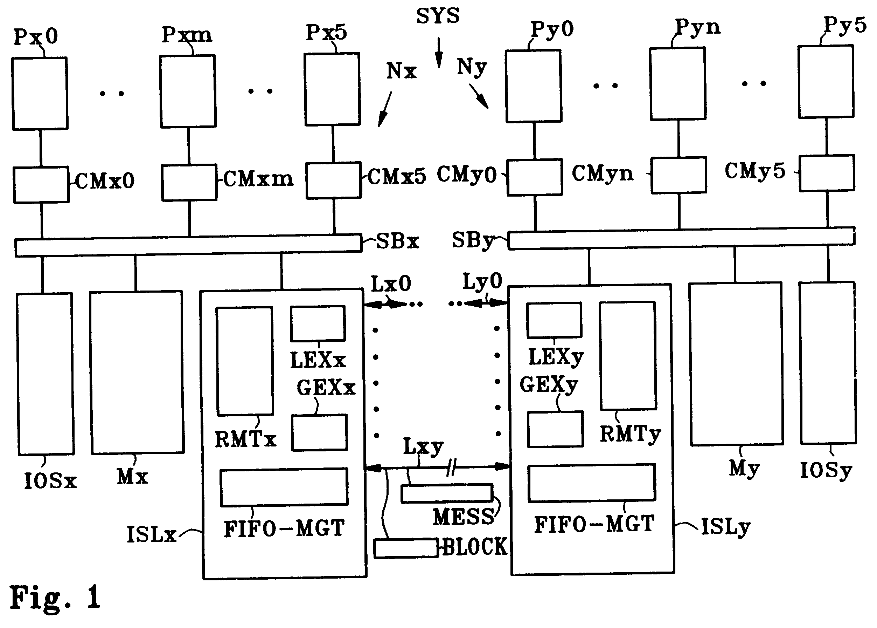

Le système informatique SYS représenté sur la figure 1 comprend une pluralité de noeuds de traitement N (Nx, Ny, ...) ayant chacun son propre système d'exploitation et fonctionnant donc de façon indépendante les uns des autres. Les noeuds N sont reliés entre eux par des liaisons de transmission L. Dans l'exemple illustré, les liaisons L sont des liaisons de transmission bidirectionnelle de données en série et portent dans leurs références les indications des numéros des deux noeuds que les liaisons respectives relient, de sorte que par exemple Lxy désigne la liaison reliant les noeuds Nx et Ny. L'emploi de liaisons de transmission internodale de données en série est moins volumineux en termes de connectique que les liaisons classiques de transmission parallèle des données. Il permet donc l'utilisation d'un plus grand nombre de connexions point à point avec d'autres noeuds et la transmission d'un plus grand nombre de communications simultanées.

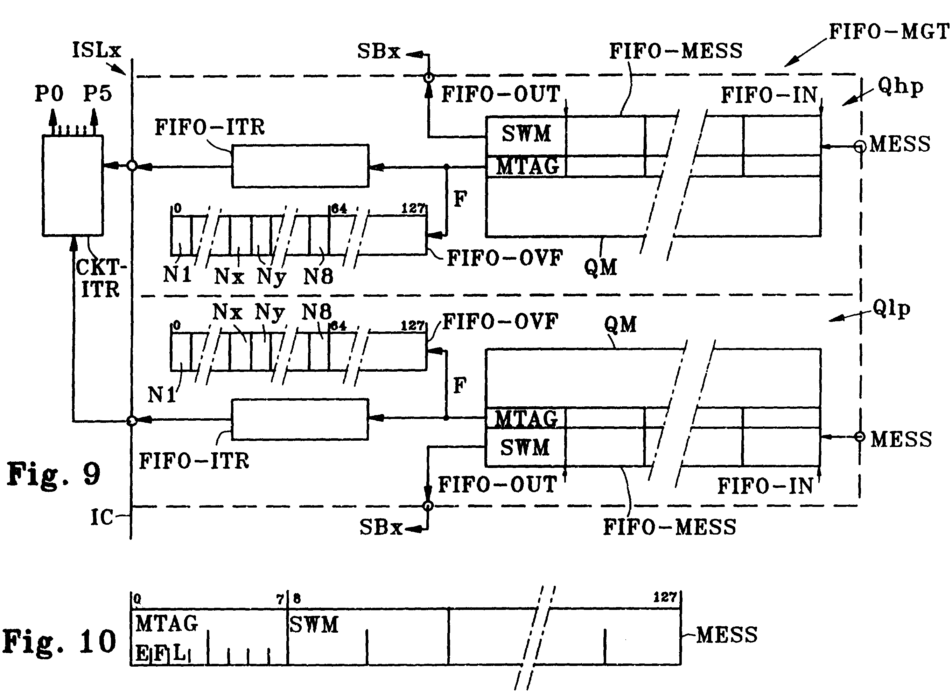

Chaque noeud comprend une pluralité de processeurs P dont les références indiquent le numéro du noeud et, éventuellement, le numéro d'ordre du processeur dans le noeud. Ainsi, Pxm désigne le processeur du noeud Nx d'ordre m. Le système SYS qui a été réalisé et qui sert d'exemple comprend huit noeuds de six processeurs chacun. Dans l'exemple illustré, on a considéré que chaque processeur P est connecté à une antémémoire CM, qui peut être intégrée dans le même circuit intégré que le processeur. Chaque noeud comprend aussi un bus système SB connecté aux antémémoires CM, à une mémoire M, à un sous-système d'entrée-sortie IOS et à un module de communication entre noeuds ISL (Inter System Link). Chacun de ces composants dans les noeuds Nx et Ny illustrés est affecté de l'indice x ou y du noeud correspondant. Le module ISLx, comme tous les autres modules du système, présente une interface interne avec le bus système SBx du noeud Nx ainsi qu'une interface externe avec les liaisons L reliant le noeud Nx aux sept autres noeuds du système et incluant la liaison Lxy. Chaque module ISL est inclus dans un circuit intégré IC indiqué à la figure 9.

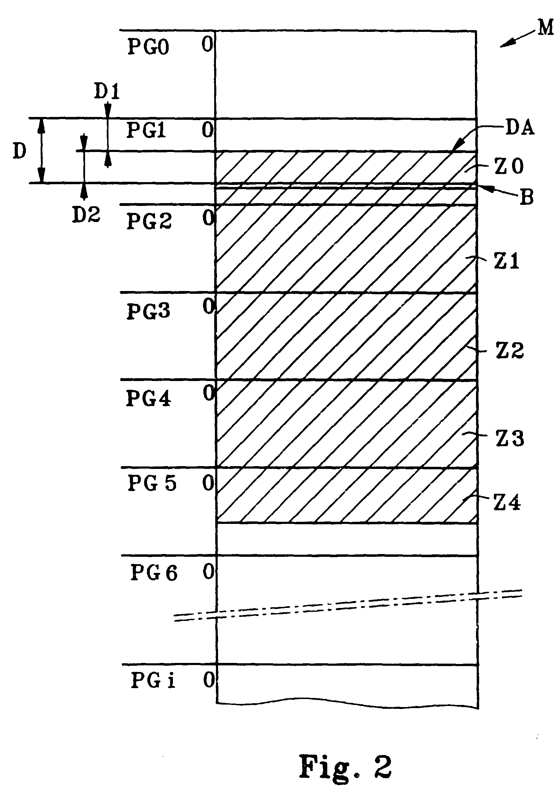

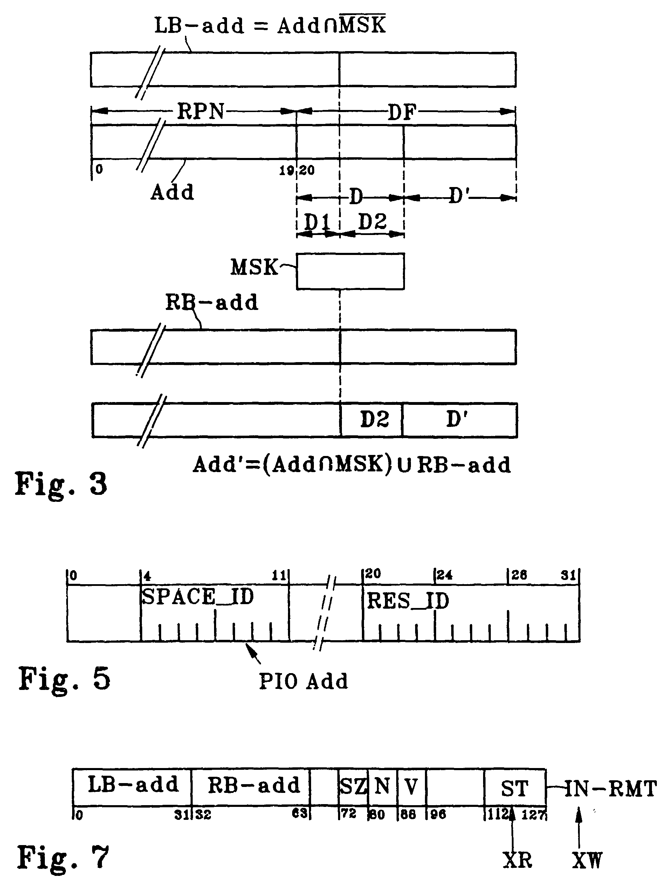

Les figures 2 et 3 serviront de support pour définir les mots qui seront utilisés par la suite, afin d'éviter toute confusion. La figure 2 illustre schématiquement et partiellement une mémoire principale M de l'un des noeuds N. La mémoire M est ordinairement divisée en une suite de pages PG (PG0, PG1, ... PGi, ...), par exemple de 4 kilooctets chacune. Dans la mémoire M, on nomme aire de données DA (Data Area) la partie de mémoire contenant les données demandées. L'aire DA peut être inférieure ou supérieure à une page. L'aire DA illustrée comprend trois pages entières PG2, PG3, PG4 et deux parties de pages terminales respectives PG1 et PG5. Une zone de données Z est la partie des données d'une page de l'aire DA. Ainsi, l'aire DA illustrée comprend cinq zones de données Z0-Z4, où Z0 et Z4 sont les parties des pages terminales respectives PG1 et PG5 et Z1-Z3 sont faites des pages entières respectives PG2, PG3 et PG4. Chaque page est elle-même divisée en blocs de données B, aussi appelées lignes d'antémémoire (Cache Lines). Chaque bloc B constitue une unité d'échange de données entre mémoires et antémémoires ainsi que entre antémémoires. Des copies des blocs B sont gérées par le matériel en suivant un protocole permettant de maintenir la cohérence des copies. Chaque bloc B a couramment une largeur de trente-deux ou soixante-quatre octets. A chaque octet correspond une adresse physique et une adresse logique.

La figure 3 illustre un exemple de structure d'une adresse physique Add d'un octet, qui est transmise sur un bus système SB. L'adresse Add est faite de 32 bits, dont les vingt premiers bits 0:19 constituent un champ RPN (Real Page Number) et dont les douze derniers bits 20:31 forment un champ de déplacement DF. Le champ RPN représente le numéro de la page réelle RPN contenant l'octet. Les six premiers bits 20-25 du champ DF représentent le déplacement (offset) D du bloc contenant l'octet. Le déplacement D d'un bloc B définit la position du bloc par rapport au début (déplacement 0 indiqué à la figure 2) de la page contenant le bloc. Le déplacement D d'un bloc B se décompose souvent en une partie D1 de bits de poids forts définissant le déplacement d'une zone (la zone Z0 dans la figure 2) et une partie D2 faite des bits de poids faibles et indiquant le déplacement du bloc dans la zone. Les six derniers bits 26:31 du champ de déplacement DF définissent le déplacement D' de l'octet dans le bloc B. L'adresse logique est celle vue par le programme au niveau des instructions définies plus bas. Cette adresse est transformée par le processeur qui exécute l'instruction en une adresse physique. Cette transformation est gérée par le système d'exploitation. Enfin, en référence à la figure 1, on définit un paquet MESS comme unité de transfert d'un message et un paquet BLOCK comme unité de transfert de données sous forme d'un bloc B, les deux paquets MESS et BLOCK transitant sur une liaison Lxy entre deux noeuds Nx et Ny.

Comme autres définitions, on appelle macro-instruction un programme spécifique que doit exécuter un processeur par une suite d'instructions. Le système informatique SYS servant d'exemple de réalisation de l'invention est du type RISC (Reduced Instruction Set Computing). Les processeurs de chaque noeud N sont de ce type et sont connus sous le nom de marque PowerPC déposée par la société US International Business Machines, Inc. Comme son nom l'indique, la technologie RISC utilise peu d'instructions, parmi lesquelles LOAD désigne une instruction de lecture correspondant à une entrée dans le processeur qui exécute l'instruction, tandis que STORE désigne une instruction d'écriture correspondant à une sortie hors du processeur.

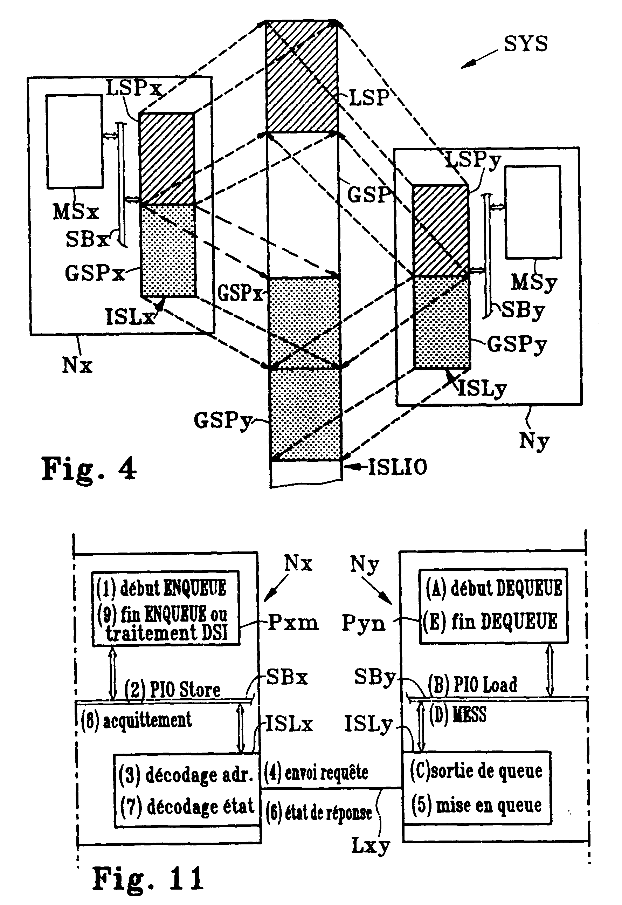

La figure 4 illustre une caractéristique du système SYS utilisant les processeurs indiqués précédemment. Selon cette caractéristique, il existe dans le système SYS deux sortes d'espaces d'adressage, à savoir un espace mémoire MS et un espace d'entrée-sortie ISLIO. Un espace mémoire est l'espace normalement formé par les mémoires, tandis que l'espace d'entrée-sortie ISLIO est l'espace d'adressage disponible pour les registres que contient l'ensemble des modules ISL. A ces deux espaces correspondent deux types d'accès respectifs que traduisent les deux états d'un bit de requête T sur le bus système SB. On supposera que le bit de requête T = 0 correspond à l'accès dans l'espace mémoire MS et que T = 1 correspond à un accès dans l'espace ISLIO. D'autre part, dans le seul but de faciliter la compréhension de la description, les requêtes transmises par les bus systèmes et qui se rapportent aux deux espaces respectifs portent ici des noms différents : les requêtes Read/Write pour l'espace mémoire et les requêtes d'entrée-sortie programmées PIO Load et PIO Store pour l'espace ISLIO.

On a vu que l'espace d'adresses ISLIO dans un module ISL correspond à un espace d'adresses pour lequel l'accès s'effectue par une référence ayant un bit de requête T = 1. La capacité d'adressage de cet espace est par exemple 4 gigaoctets. L'espace ISLIO est physiquement réparti parmi tous les noeuds. La figure 4 illustre aussi cette répartition parmi les noeuds Nx et Ny indiqués à la figure 1. Chaque noeud y est schématiquement représenté par son bus système SBx, SBy respectif, par son espace mémoire MSx, MSy respectif et par sa portion d'espace ISLIO physiquement présent dans les modules iSLx, ISLy respectifs. L'espace ISLIO schématiquement et partiellement illustré dans la figure 4 se rapporte aux espaces d'adresses dans les modules ISL et se partage en un espace local LSP et un espace global GSP. L'espace local LSP, hachuré dans la figure 4, contient les registres accessibles seulement par le noeud auquel appartient le module ISL. Un même registre de module ISL est accédé à la même adresse par les processeurs P du noeud auquel le registre appartient, quel que soit le noeud. Une requête à une adresse de l'espace local LSP n'est donc jamais transmise à travers les liaisons L. En bref, l'espace LSP est un espace privé au noeud. Ceci est schématisé dans la figure 4 par le fait que les reports des espaces locaux LSPx et LSPy dans l'espace ISLIO, représentés par des traits discontinus, se font dans le même espace local LSP de l'espace ISLIO. L'espace global GSP, tacheté dans la figure 4, contient des registres adressables par tous les noeuds du système SYS. L'espace global GSP est divisé en un nombre de parties physiquement implantées dans les modules ISL des noeuds respectifs. Par exemple, comme indiqué par les traits discontinus dans la figure 4, les espaces globaux GSPx et GSPy de l'espace ISLIO sont implantés physiquement dans les modules ISLx et ISLy respectifs. L'espace global GSP est donc un espace d'adresses partagé et physiquement distribué. Par exemple, un champ de bits de l'adresse peut fournir une identification du noeud auquel appartient le registre relatif à cette adresse.

Dans l'exemple illustré, les modules ISL comprennent des ressources matérielles qui peuvent être des registres, et des bancs de registres effectuant la fonction du type premier entré premier sorti et connus sous le nom usuel de bancs FIFO. Les ressources sont accédées par les requêtes d'entrée-sortie programmées PIO (Programmed Input/Output). Les registres utilisés dans l'exemple illustré ont des largeurs variables tandis que les bancs FIFO utilisés ont une largeur de 16 octets. Dans l'exemple choisi, la longueur des données transférées par chacune de ces opérations doit exactement correspondre à la longueur du registre cible. L'exécution par un processeur des instructions LOAD et STORE est terminée lorsque le processeur reçoit du bus système une réponse à la requête PIO Load ou PIO Store qu'il a émise. La réponse à une requête PIO Load consiste en des données tandis que la réponse à une requête PIO Store est faite d'un acquittement. D'autre part, chaque module ISL peut être commandé pour changer l'état d'un composant interne au module ou pour y déclencher des actions spécifiques. Dans ce cas, les commandes ont la forme d'opérations PIO Load ou PIO Store à des adresses spécifiques. Ainsi, par une opération PIO Store par exemple, l'adresse spécifie l'action à prendre tandis que les données peuvent paramétrer la commande.

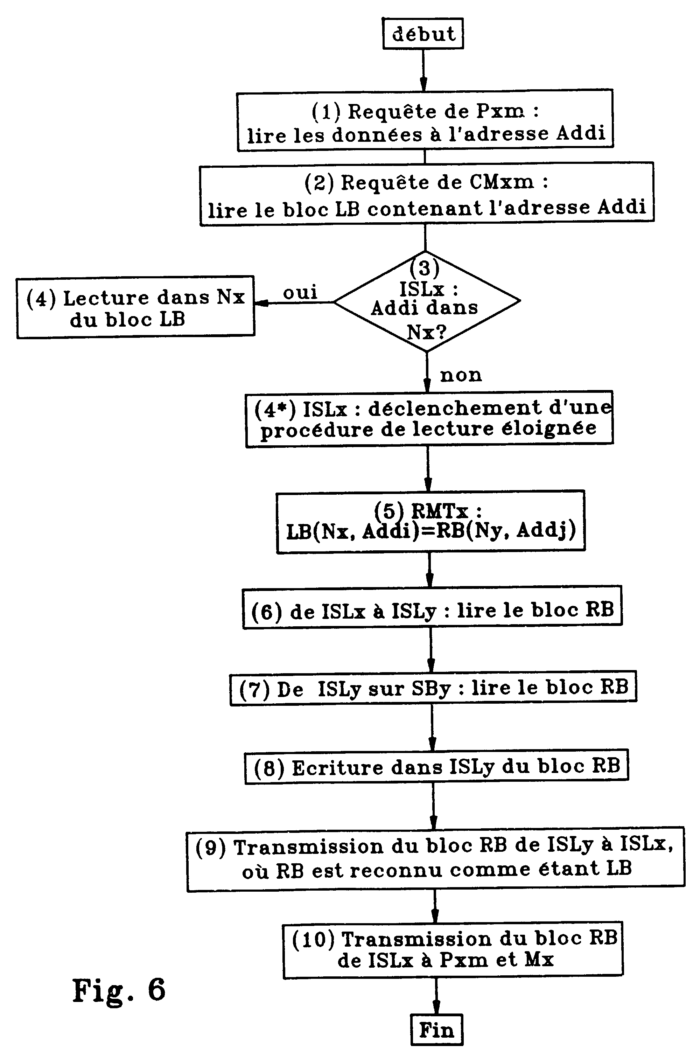

La figure 5 illustre un exemple d'adresse PIO, notée PIO Add, d'un banc FIFO. Les adresses de ces registres sont utilisées comme adresses réelles pour les opérations PIO Load et PIO Store. L'adresse PIO Add illustrée a trente-deux bits et inclut deux parties essentielles : un champ d'identification d'espace SPACE_ID et un champ d'identification de ressources RES_ID. Le champ SPACE_ID est fait de bits de poids forts, ici les huit bits 4:11, et représente une identification codée dans l'espace ISLIO, la valeur 0 désignant par exemple l'espace local LSP de l'espace ISLIO et les valeurs 1-8 identifiant les espaces globaux GSP relatifs aux noeuds respectifs N1-N8. Le champ d'identification de ressources RES_ID est fait des bits de poids faibles 20:31 et fournit une identification codée des ressources visées par l'opération (dans cet exemple, la ressource est un banc FIFO). En outre, si les bits 28:31 ont la valeur 0000, les registres mappés dans l'espace ISLIO ont une largeur de 16 octets.

Le principe de décodage d'une adresse PIO est le suivant. Si le champ d'identification d'espace SPACE_ID a la valeur 0, le registre est dans l'espace local LSP de l'espace ISLIO et la requête est transmise à un module local d'exécution des entrées-sorties programmées LEXx, qui est un élément matériel situé dans le module ISLx du noeud Nx considéré et qui est indiqué à la figure 1. Si l'identification d'espace SPACE_ID correspond à un identificateur noté NODE_ID du noeud Nx, la requête est transmise à un module global d'exécution des entrées-sorties programmées GEXx, qui est aussi un élément matériel situé dans le module ISLx du noeud Nx. Autrement, la requête est à exécuter sur un noeud éloigné Ny par le module GEXy.

Dans chaque noeud du système, on met en oeuvre un procédé de gestion de toutes les mémoires M et CM du noeud. L'exemple choisi comme procédé de gestion utilise un même protocole bien connu de cohérence de ces mémoires. D'une manière générale, le procédé de gestion des échanges entre les mémoires d'un système informatique consiste en l'emploi du mode de mise à jour ou du mode d'invalidation des copies d'un bloc de mémoire. Si l'invalidation est choisie, il est par exemple connu d'ajouter à l'adresse de chaque bloc deux bits représentatifs de l'état du bloc dans la mémoire M, CM correspondante. On distingue de manière classique quatre états fondamentaux du protocole de cohérence des mémoires, maintenant normalisés sous le code MESI. Selon ce protocole et dans chaque noeud, le noeud Nx par exemple, l'état modifié "M" correspond au cas où une antémémoire CMxm est la seule détentrice d'une copie modifiée d'un bloc, dite copie de référence, et où il n'existe pas d'autres copies valides dans le système. Dans ce cas, l'antémémoire CMxm détentrice de la copie ayant l'état "M" est responsable de fournir et de mettre à jour la mémoire Mx si elle veut se débarrasser de cette copie. Une copie ayant l'état exclusif "E" est aussi la copie de référence détenue par une antémémoire CMxm, mais dans ce cas la mémoire centrale Mx en a une copie à jour. L'état partagé "S" (Shared) se rapporte à une copie ayant éventuellement plusieurs détenteurs, mais dont une copie est à jour dans la mémoire centrale Mx. Les détenteurs peuvent être potentiels selon la stratégie de gestion adoptée. Enfin, on trouve l'état de copie invalide "I" quand l'antémémoire CMxm a une copie du bloc qui n'est pas valide. Lorsqu'un processeur Pxm veut accéder à un bloc à l'état "I", son antémémoire CMxm envoie une requête sur le bus système SBx pour acquérir le bloc. Les autres antémémoires CMx et la mémoire Mx sur le bus système SBx prennent connaissance de cette requête et réagissent en fonction de l'état de la copie que la mémoire correspondante possède. Ainsi, si une antémémoire CMx0 possède le bloc dans l'état modifié "M", elle fournira le bloc au bus système, permettant ainsi au processeur demandeur Pxm d'accéder aux données et à son antémémoire CMxm d'acquérir la copie de référence. Il existe encore d'autres états optionnels normalisés ou non, non décrits dans la présente demande mais pouvant être utilisés par le procédé de transfert de données qui va maintenant être décrit.

2. Procédé de transfert de données entre noeuds

Le procédé de transfert des données entre les noeuds Nx et Ny du système SYS va être décrit en référence à la figure 1 et à l'organigramme de la figure 6. On suppose à l'étape (1) de l'organigramme que le processeur Pxm veut lire des données ayant l'adresse Addi et que son antémémoire CMxm n'a pas le bloc contenant les données demandées, qu'on désignera bloc local LB. Une copie du bloc local LB se trouve dans la mémoire Mx. A l'étape (2) l'antémémoire CMxm émet donc une requête sur le bus système SBx pour obtenir une copie du bloc local LB. A l'étape (3) du procédé, le module ISLx recherche s'il est responsable de fournir la copie valide du bloc LB. Si le résultat de la recherche est négatif, cette copie du bloc se trouve dans la mémoire Mx ou dans l'une des antémémoires CMx autres que l'antémémoire CMxm et est fournie de façon classique, à l'étape (4), à l'antémémoire CMxm par la mémoire Mx ou CMx qui détient le bloc local LB. Si le résultat de la recherche est positif, le module ISLx doit faire venir cette copie d'un autre noeud du système et déclenche donc à l'étape (4*) une procédure de lecture éloignée du bloc désiré. Le module ISLx se comporte alors avec le bus système SBx comme une antémémoire CM. L'exemple qui suit considérera que l'interface interne du module ISLx se comporte comme une antémémoire recherchant en dehors du noeud Nx un bloc à l'état modifié. L'interface interne ISLx/SBx s'engage donc à fournir le bloc local LB au noeud Nx et, fonctionnant comme si le bloc est à l'état modifié "M", elle va le fournir au bus système SBx, qui permettra au processeur demandeur Pxm d'acquérir les données à l'adresse Addi et à la fois à la mémoire Mx de se mettre à jour et à l'antémémoire CMxm d'acquérir le bloc complet LB.

Pour l'étape (5), le module ISLx contient une table de correspondance, ici appelée table de mappage éloigné RMTx (Remote Mapping Table), lui permettant de savoir s'il est responsable de la copie valide à l'adresse Addi et de lire dans les mémoires des autres noeuds du système. Dans cette table, le module ISLx à l'étape (5) va savoir que l'adresse Addi du bloc local recherché LB correspond au bloc éloigné RB à l'adresse Addj d'un autre noeud Ny. A l'étape (6), le module ISLx envoie au noeud Ny, par l'intermédiaire de la liaison Lxy, une requête de lecture à l'adresse Addj. A l'étape (7), le module ISLy reçoit la requête du module ISLx et se comporte alors avec le bus système SBy comme une antémémoire CMy qui veut lire un bloc dans le noeud Ny. Par conséquent, le module ISLy transmet par son interface ISLy/SBy une requête de lecture du bloc RB au bus système SBy du noeud Ny et reçoit en réponse, à l'étape (8), le bloc RB que détient l'une des mémoires My, CMy et qui incorpore la donnée à l'adresse Addj. A l'étape (9), le module ISLy transmet, sous forme d'un paquet BLOCK, le bloc éloigné RB au module ISLx du noeud Nx, qui reconnaît le bloc éloigné RB comme étant le bloc local demandé LB contenant l'adresse Addi. Alors, à l'étape (10), comme le bloc local LB est considéré comme ayant l'état modifié "M", le module ISLx fournit au bus système SBx le bloc local LB, à la fois à la mémoire Mx et à l'antémémoire CMxm qui en extraira les données à l'adresse Addi pour les fournir au processeur Pxm. Ceci termine donc le procédé conforme à l'invention pour la gestion de données dans le système SYS.

Ce procédé a l'avantage d'être simple et rapide. Il est simple, puisqu'il met en oeuvre à la fois un état classique du protocole de gestion des mémoires, dont se servent par ailleurs les noeuds du système, et un comportement classique qu'ont ces mémoires en réponse à cet état. La solution adoptée ne complique donc pas le matériel et le logiciel. Il est rapide car, bien que les données demandées par un processeur d'un noeud lui sont fournies par une mémoire d'un autre noeud, il les obtient par sensiblement les mêmes procédures qui seraient utilisées si elles venaient d'une mémoire du même noeud.

La mise en oeuvre de cet exemple de procédé suppose donc qu'une correspondance soit établie entre chaque noeud. Il existe plusieurs façons possibles pour établir dans un noeud une correspondance permettant au noeud de lire dans les autres noeuds. L'exemple qui suit pour l'établissement de la table de correspondance RMT dans chaque module ISL exploite la caractéristique précitée des processeurs utilisés dans l'exemple de réalisation du système. En se référant au texte plus haut, on comprend que les tables de correspondance RMT sont accessibles dans l'espace local LSP de l'espace ISLIO. Afin d'établir la correspondance entre les adresses Addi et Addj, on écrit dans l'espace local LSP à une adresse correspondant à une entrée de la table RMT. Une lecture à cette même adresse retourne l'état du transfert en cours mis à jour par le module ISL après chaque opération sur un bloc passé par le module. Cette opération de lecture permet de s'assurer qu'une suite de transferts de données s'est effectuée sans défaut.

Nous allons décrire maintenant le contenu de la table de correspondance RMT et son usage au cours de l'étape (5) du procédé. Dans l'exemple illustré, chaque table de correspondance RMT constitue une mémoire associative faite de seize registres dans l'espace local d'adressage LSP de l'espace ISLIO. Les registres sont gérés par logiciel et ont une largeur de seize octets. Chaque registre définit dans la table une entrée IN-RMT.

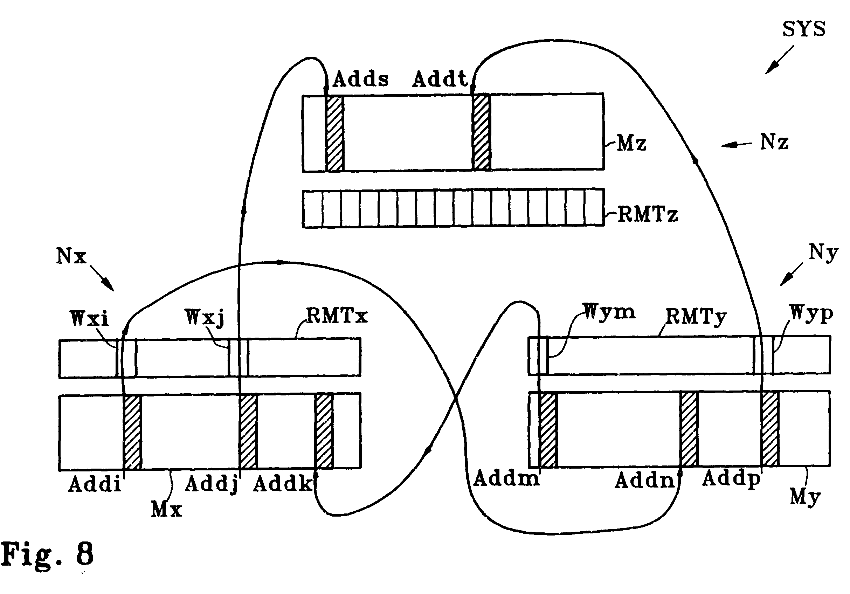

La figure 7 illustre un exemple de format d'une entrée IN-RMT d'une table RMT. Elle est faite de 128 bits répartis comme suit :

- LB-add est un champ formé des bits 0:31, représentatif de l'adresse réelle du bloc local de données LB.
- RB-add est un champ formé des bits 32:63, représentatif de l'adresse réelle du bloc éloigné de données RB.
- SZ est un champ formé des bits 72:79, représentatif de la taille du bloc. La table qui suit donne un exemple de ce champ.

Dans cette table, les six bits de poids faibles parmi les sept bits du bloc SZ définissent un masque MSK, dont l'usage sera décrit ultérieurement en référence à la figure 3

| longueur du bloc | taille du champ SZ |
|---|---|
| 64 octets | 0 0 0 0 0 0 0 1 |
| 128 octets | 0 0 0 0 0 0 1 1 |
| 256 octets | 0 0 0 0 0 1 1 1 |
| 512 octets | 0 0 0 0 1 1 1 1 |
| 1 kilooctet | 0 0 0 1 1 1 1 1 |
| 2 kilooctets | 0 0 1 1 1 1 1 1 |
| 4 kilooctets | 0 1 1 1 1 1 1 1 |

- N est un champ de huit bits 80:87 désignant le noeud éloigné.
- V est, dans un champ de huit bits 88:95, le bit le moins significatif (95) indiquant si l'entrée IN-RMT est impliquée dans une adresse éloignée.
- ST, enfin, est un champ d'état fait des seize bits 112-127 et représentatif d'une erreur codifiée. Au cas où une erreur se produit durant une séquence de lectures éloignées, elle est enregistrée selon un code par le module ISL dans le champ ST de l'entrée IN-RMT.

La figure 3 illustre schématiquement l'usage d'une entrée de la table RMT dans un exemple de mise en oeuvre d'une opération de lecture éloignée. C'est une opération par laquelle un processeur Pxm, qui exécute une instruction déclenchant une requête de lecture sur le bus SBx d'un bloc local mappé LB, obtient un accès de lecture à une zone de mémoire éloignée. Cette opération comprend la détection d'une adresse mappée et le traitement d'une transaction de lecture sur bus. Pour détecter une adresse mappée, le module ISLx détecte et saisit ("snoops") les requêtes de lecture passant sur le bus système SBx et les analyse. On a supposé que l'adresse Add de chaque requête est celle qui a été décrite précédemment en référence à la figure 3. Sur cette figure est aussi représentée une adresse réelle LB-add d'un bloc local LB d'une entrée valide de la table RMTx. Le procédé, dont le principe est bien connu de l'homme du métier, consiste à comparer l'adresse Add de chaque requête détectée et analysée par le module ISLx avec le champ LB-add de toutes les entrées valides de la table RMTx, qui est utilisée ici comme une mémoire associative. Cette comparaison se fait en référence avec le masque MSK défini par les six bits de poids faibles du champ SZ d'une entrée IN-RMT telle que décrite plus haut en référence à la figure 7. Cette comparaison permet de trouver le bloc local LB recherché et s'exprime par la relation $Add \cap \overline{MSK} = LB\text{-}add$. En fait, la frontière entre la suite des "0" et la suite des "1" dans le masque MSK détermine le déplacement D1 de la zone de donnée Z et le déplacement D2 du bloc dans zone. En consultant la table RMTx, on obtient l'adresse réelle RB-add du bloc éloigné RB correspondant. La relation $(Add \cap MSK) \cup RB\text{-}add$ détermine le déplacement D de l'adresse Add' qui sera envcyée par le module ISLx sur la liaison Lxy. On rajoute ensuite le déplacement D' pour obtenir l'adresse réelle Add' de la requête de lecture éloignée sur bus.

Nous décrirons maintenant l'usage du procédé dans un système composé de plusieurs noeuds. La figure 8 représente schématiquement un système SYS fait de trois noeuds Nx, Ny et Nz dans lesquels sont seulement illustrées les mémoires et les tables respectives Mx, My, Mz et RMTx, RMTy et RMTz. On appellera fenêtre W la zone continue d'adresse d'une mémoire locale qui est mise en correspondance par chaque registre avec une zone continue d'adresse d'une mémoire distante. Une table RMT comprenant seize registres dans l'exemple illustré, elle permet donc d'ouvrir seize fenêtres. Cette appellation traduit la visibilité que donne une table RMTx d'un noeud Nx sur le contenu des mémoires des autres noeuds du système SYS. Dans l'exemple de la figure 8, on a supposé qu'un processeur Pxm du noeud Nx demande des données à une adresse Addi que son antémémoire CMx doit aller chercher dans la mémoire Mx. On a supposé aussi que l'adresse Addi appartient à une fenêtre Wxi. Comme indiqué par une ligne courbe fléchée entre les noeuds, le noeud Nx voit à travers la fenêtre Wxi de la table RMTx que les données à l'adresse Addi se trouvent à l'adresse Addn de la mémoire My du noeud Ny. De même, si par la suite le processeur Pxm ou un autre processeur Px0 demande des données à une adresse Addj de la mémoire Mx et si l'adresse Addj appartient à une fenêtre Wxj, le noeud Nx verra à travers la fenêtre Wxj de la table RMTx que ces données se trouvent à l'adresse Adds de la mémoire Mz du noeud Nz. Réciproquement, à une adresse Addm de la mémoire My, le noeud Ny voit à travers une fenêtre Wym de la table RMTy que les données se trouvent dans la mémoire Mx du noeud Nx à l'adresse Addk, et à une adresse Addp de la mémoire My sera vue à travers une fenêtre Wyp l'adresse Addt de la mémoire Mz. Le même raisonnement peut se généraliser à tous les noeuds du système multinodal SYS. D'une manière générale, on en déduit que toute aire de données DA de la mémoire M d'un noeud N peut être vue par un, plusieurs ou tous les autres noeuds du système à travers leurs tables RMT respectives de façon simultanée ou successive.

On a vu que plusieurs fenêtres peuvent être ouvertes au même moment. Ainsi, dans un noeud multiprocesseur plusieurs aires de données peuvent être transférées en parallèle. Ceci permet de multiplier le débit de transfert de données par le nombre représentatif du degré de parallélisme (nombre de transferts parallèles) et constitue un avantage important. En outre, en même temps que les processeurs d'un noeud exécutent des transferts depuis des mémoires distantes, la mémoire de ce noeud peut être accédée comme mémoire distante pour les autres noeuds. En d'autres termes, ce procédé permet de faire des transferts bidirectionnels simultanés et offre donc un avantage additionnel tout aussi important.

Dans ce contexte, plusieurs solutions sont possibles pour gérer l'ouverture et la fermeture des fenêtres de chaque table. L'exemple de solution qui suit permettra de déduire les autres solutions.

Comme indiqué à la figure 7, à chaque entrée IN-RMT d'une table RMT sont associées deux adresses XW et XR de l'espace local LSP de l'espace ISLIO. Une fenêtre W s'ouvre par une opération de mappage MAP et se ferme par une opération UNMAP. Les opérations MAP et UNMAP se traduisent respectivement sur le bus système par des requêtes d'écriture PIO Store et de lecture PIO Load à l'adresse XW. La requête PIO Store met à jour l'entrée IN-RMT de la table et établit ainsi la correspondance entre une adresse de la mémoire locale et une adresse d'une mémoire d'un noeud distant. La requête PIO Load retourne le contenu de l'entrée IN-RMT et invalide la correspondance, par exemple en abaissant le bit correspondant du champ V de cette entrée.

Lorsque l'opération MAP a été exécutée par le module ISLx, une fenêtre W est ouverte et toutes les requêtes de lecture d'un bloc local LB, dont les adresses sont contenues dans la fenêtre, sont traduites grâce à la correspondance établie par l'entrée IN-RMT et sont envoyées au noeud éloigné Ny. Lorsque l'opération UNMAP a été exécutée par le module ISLx, la fenêtre W est fermée et les requêtes de lecture dont les adresses étaient contenues dans la fenêtre sont exécutées normalement par la mémoire locale Mx.

Une autre solution, par exemple, serait de laisser une fenêtre ouverte en permanence et de pratiquer des transferts successifs. A la fin de chacun de ces transferts, une opération GET-STATUS de lecture PIO Load à l'adresse XR retourne le contenu du champ ST de l'entrée IN-RMT, sans invalider cette entrée.

Il est à noter encore qu'une même adresse éloignée peut être mappée par différentes adresses de mémoire locale de mêmes noeuds ou de noeuds différents. D'autre part, si on veut éviter de gérer des cas d'erreur multiple, il ne faut pas qu'une adresse de mémoire éloignée différente soit mappée par une même adresse de mémoire locale et que deux entrées IN-RMT valides mappent des domaines d'adresse se chevauchant.

Ce procédé de transfert de données offre encore d'autres avantages que ceux indiqués précédemment. En particulier, il permet d'avoir une faible latence pour la transmission de messages courts et, par conséquent, un fort débit pour ces messages. D'autre part, il donne au noeud récepteur le pouvoir de commander le flux de transmission des données. Par conséquent, le récepteur peut interrompre momentanément un transfert en cours, sans perte de données et sans perturber le fonctionnement de l'émetteur. De plus, le flux étant commandé en permanence par le noeud récepteur, le stockage intermédiaire de données n'est pas nécessaire. Par ailleurs, c'est le noeud récepteur qui désigne l'adresse où sont rangées les données en mémoire. S'il fait une erreur sur l'adressage des données à lire dans le noeud émetteur, la lecture de ces données à une adresse erronée n'altère pas ces données. Le procédé de transfert qui vient d'être décrit assure donc une bonne protection internodale des données.

La description du procédé de transfert internodal de données fait clairement ressortir que l'homme du métier peut y apporter de nombreuses variantes. On a vu qu'il convient bien au transfert de données entre noeuds multiprocesseurs. Il est clair que les noeuds peuvent avoir un nombre différent et quelconque de processeurs. On a vu aussi qu'il convient bien à un système où les noeuds ont chacun leur propre système d'exploitation. Cependant, d'une manière plus générale, tous les noeuds, ou une partie d'entre eux ou aucun d'eux pourraient partager le même système d'exploitation. Par exemple, deux noeuds parmi d'autres pourraient être gérés par le même système d'exploitation. D'autre part, certains noeuds peuvent ne pas avoir de sous-système d'entrée-sortie. Par ailleurs, le procédé décrit et illustré applique pour les mémoires de chaque noeud le protocole de cohérence de type MESI. Cependant, il est clair qu'il n'utilise que le mécanisme relatif à l'état modifié "M" de ce type de protocole. Si d'autres protocoles étaient utilisés dans un, plusieurs ou tous les noeuds, le procédé pourrait simplement utiliser un mécanisme analogue à celui décrit pour le transfert internodal de données. Ce protocole implique la présence d'antémémoires, comme illustré. Cependant, les processeurs pourraient avoir une hiérarchie plus élevée d'antémémoires.

D'une manière générale, il s'agit donc d'un procédé de transfert de données entre noeuds d'un système informatique, dans lequel chaque noeud Nx comprend au moins un processeur Pxm pourvu d'une antémémoire CMxm, une mémoire Mx, un bus système SBx et un module de communication ISLx avec un autre noeud Ny, la gestion des données dans chaque noeud se faisant selon un protocole de cohérence MESI des mémoires du noeud. Une caractéristique de ce procédé est d'utiliser un mécanisme de ce protocole pour le transfert des données d'un premier noeud Nx dans un second noeud Ny.

Dans l'exemple illustré, on a vu que le mécanisme correspond à l'état modifié du protocole de cohérence de type MESI. Plus précisément, le mécanisme suffisant de cet état pour le procédé de transfert consiste à utiliser l'interface interne du module ISLx avec le bus système SBx comme si l'interface était celle d'une antémémoire CMx possédant l'unique copie à jour dans ce noeud d'un bloc de données LB de ce noeud et la fournissant en réponse à la requête d'une antémémoire CMxm de ce noeud.

La façon ayant servi d'exemple de réalisation pour l'utilisation de ce mécanisme pour la mise en oeuvre du procédé de transfert consiste à transformer ladite requête en une requête concernant le second noeud Ny et à la transférer du premier noeud au second noeud Ny pour l'acquisition d'une copie d'un bloc de données RB du second noeud, à transférer cette copie du bloc de données RB du second noeud Ny au premier noeud Nx, et à la présenter comme la copie unique à jour demandée par le module du premier noeud Nx.

Dans l'exemple illustré, cette façon d'opérer utilise dans le second noeud l'interface interne du module ISLy avec le bus système SBy comme celle d'une antémémoire CMy voulant acquérir une copie dans ce noeud d'un bloc de données RB de ce noeud. Une variante non illustrée consisterait par exemple à acquérir une copie du second noeud Ny par un accès direct en la mémoire My de ce noeud. Cet accès est ordinairement connu sous l'abréviation DMA (Direct Memory Access).

On a vu aussi que la façon d'utiliser le mécanisme précité du protocole MESI pouvait avoir l'avantage de profiter d'une caractéristique spécifique des processeurs ayant servi d'exemple, en utilisant dans le premier noeud Nx une table de correspondance RMTx pour reconnaître et transformer ladite requête en une requête concernant le second noeud Ny. Selon un premier mode d'application qui a été illustré en référence à la figure 8, chaque entrée de la table définit une fenêtre de correspondance entre une partie continue d'adressage des mémoires du premier noeud Nx et une partie continue d'adressage des mémoires d'un autre noeud et en ce que la reconnaissance de la requête se fait par l'adresse de la requête. Dans ce cas, il a été choisi d'écrire par l'opération MAP le contenu relatif à chaque entrée de la table pour ouvrir la fenêtre et établir ainsi la correspondance entre lesdites requêtes. Il a été choisi aussi de lire par l'opération UNMAP le contenu relatif à chaque entrée de la table pour fermer la fenêtre et invalider ainsi cette correspondance. Cependant, il est clair que ces deux choix peuvent ne pas s'ajouter, l'un d'eux pouvant être seulement utilisé alors que d'autres choix sont offerts à l'homme du métier. Selon un second mode d'application qui a aussi été envisagé précédemment, la fenêtre est ouverte en permanence, de sorte que des transferts successifs peuvent être effectués aux mêmes adresses.

On a vu aussi que si le transfert de la requête ou de ladite copie présente un défaut, le procédé consiste à inscrire le type du défaut dans le contenu de l'entrée IN-RMT de la table RMT qui correspond à ladite requête et à rendre ce contenu accessible en lecture par l'opération UNMAP ou GET-STATUS.

Il en résulte en corollaire un système informatique SYS comprenant des processeurs Pxm, Pyn pourvus d'antémémoires respectives et répartis dans au moins deux noeuds Nx, Ny comprenant une mémoire M, un bus système SB et un module de communication ISL qui met en oeuvre le procédé défini précédemment.

On notera en particulier que dans l'exemple de réalisation illustré la table de correspondance est comprise dans l'espace d'adressage d'entrée-sortie ISLIO relatif aux registres que contiennent les modules des noeuds. Selon une variante possible, elle pourrait être comprise dans l'espace d'adressage mémoire MS de la figure 4. De même, bien que la table de correspondance illustrée est accessible dans un espace local LSP de l'espace d'adressage d'entrée-sortie ISLIO, elle pourrait aussi bien être accessible dans espace global GSP.

### 3. Procédé de transfert de messages entre noeuds.

Dans l'exemple du système SYS représenté sur la figure 1, on a vu que les noeuds peuvent communiquer entre eux par l'intermédiaire de messages MESS. La figure 1 représente sous forme de bloc et la figure 9 illustre schématiquement une partie du module ISLx, appelée FIFO-MGT et utilisée pour la mise en oeuvre d'un procédé de transfert de messages entre les noeuds du système SYS. Ce procédé fait intervenir la notion de queue de message dans chaque noeud, ici dans chaque module ISL du noeud. Dans l'exemple choisi du système SYS, tout module ISL d'un noeud quelconque N comprend, dans sa partie FIFO-MGT telle qu'illustrée dans la figure 9, deux queues : une queue de grande priorité Qhp pour la réception de messages prioritaires, et une queue de faible priorité Qlp pour la réception d'autres messages. D'une manière plus générale, il peut exister une queue, ou plusieurs queues qui vont générer des interruptions de niveaux différents, lesquels niveaux peuvent correspondre à des degrés de priorité comme dans le présent exemple. D'un point de vue matériel, chaque queue comprend un banc de registres FIFO-MESS pour stocker les messages et un dispositif de gestion QM de la queue. Chaque banc FIFO-MESS est ici fait de trente deux cellules. Une cellule est un registre interne de seize octets utilisés pour stocker un message MESS. Du fait de l'utilisation dans le matériel d'une structure à registres de taille limitée, ce procédé de transfert de messages est utilisé pour des messages MESS de taille prédéterminée. Sur le plan logiciel, chaque banc FIFO-MESS a deux adresses bien connues dans l'espace d'adresses ISLIO. La première adresse, notée FIFO-IN et située dans l'espace global GSP du noeud correspondant, est utilisée pour effectuer des opérations d'écriture dans la queue. La seconde adresse, notée FIFO-OUT et située dans l'espace local LSP de l'espace ISLIO, est utilisée pour effectuer des opérations de lecture dans la queue. Chaque queue est aussi une source d'interruptions du fonctionnement des processeurs du noeud hôte et commande donc un registre d'interruption FIFO-ITR. Le registre d'interruption FIFO-ITR a une entrée provenant de la queue de message et une sortie amenée à une sortie du module ISLx, où elle est reliée à une entrée d'un circuit CKT-ITR de gestion des interruptions du noeud correspondant. Ce circuit reçoit toutes les interruptions et les gère selon leur priorité et le niveau d'interruption permis par le processeur désigné. Ce circuit a donc une sortie vers un processeur désigné du noeud ou des sorties vers tous ou partie des processeurs P0-P5 du noeud. La structure et le fonctionnement d'un tel circuit de gestion des interruptions sont bien connus de l'homme du métier. Dans une version simplifiée, la sortie du registre FIFO-ITR peut être amenée directement à un processeur. En outre, chaque queue de messages commande dans le module ISLx l'entrée d'un registre de débordement FIFO-OVF qui indique l'identité du ou des noeuds qui ont tenté d'écrire alors que la queue était pleine. Le fonctionnement d'une queue de messages va maintenant être décrit.

Selon un exemple de mise en oeuvre du procédé, tout message est transmis à un noeud en le mettant dans une queue de messages de ce noeud par une opération ENQUEUE, tandis qu'un message est lu d'une queue en lui faisant quitter la queue par l'opération DEQUEUE. Les opérations de mise en queue ENQUEUE font intervenir les opérations d'écriture PIO Store tandis que les opérations de sortie de queue DEQUEUE font intervenir les opérations de lecture PIO Load. Dans l'exemple qui va être décrit, les opérations DEQUEUE sont exécutées seulement par le noeud propriétaire de la queue. L'adresse attachée à la queue pour les opérations de mise en queue est FIFO-IN et l'adresse pour les opérations de sortie de queue est FIFO-OUT. Tout noeud peut envoyer un message à un autre noeud du système ou à lui-même. Autrement dit, tous les noeuds peuvent écrire dans une queue relative à un noeud, mais seul ce noeud peut lire la queue. Les opérations de mise en queue et de sortie de queue sont sérialisées. Elles se concluent par le retour d'une réponse circulant sur le bus système. La réponse est un message pour les données associées à l'opération PIO Load tandis que la réponse à l'opération PIO Store est un acquittement (positif ou négatif). Les opérations d'écriture et de lecture ne sont pas des opérations bloquantes. Une réponse est toujours donnée à chacune d'elles, de sorte qu'il n'y a pas de blocage, par exemple dans l'attente d'un message dans la queue si la queue était vide.

La figure 10 représente schématiquement un exemple de format d'un message MESS. Les messages ont tous une même taille fixe, ici de seize octets. Le message MESS obtenu en réponse à une opération de sortie de queue DEQUEUE contient un champ MTAG d'indicateurs du matériel et d'un champ SWM destiné au logiciel. Le champ SWM est utilisable par le logiciel d'un noeud pour être transmis au logiciel d'un autre noeud. Dans l'exemple illustré, le champ MTAG est formé d'un des seize octets comprenant les bits 0:7 tandis que le champ SWM est formé des quinze autres octets comprenant les bits 8:127. Plus précisément, le champ MTAG inclut un ensemble de bits d'état de queue constituant des indicateurs. Le champ contient notamment trois indicateurs E, F et L occupant les bits d'ordre 0, 1 et 2 dans le champ représenté. L'indicateur E est un indicateur de validité du message lu dans la queue. Une opération de lecture DEQUEUE d'une queue n'ayant aucun message ne doit pas bloquer le fonctionnement du module ISL. Le bit indicateur E joue ce rôle en étant mis par exemple à l'état 1 pour indiquer que le champ SWM du message est indéfini comme résultat de l'exécution de l'opération PIO Load déclenchée par l'opération DEQUEUE. Le bit F est un indicateur de remplissage de queue. Lorsqu'une opération PIO Store est déclenchée dans un module ISLx lors d'une opération ENQUEUE pour introduire un message dans la queue d'un autre module ISLy et que le message ne peut pas y être écrit parce que la queue est saturée, le module ISLx qui a émis l'opération PIO Store est prévenu de cet événement par un acquittement négatif. A la prochaine opération de sortie de queue DEQUEUE par l'opération de lecture PIO Load relative à cette queue dans le module ISLy, ce module change l'état du bit F, pour le mettre à 1 par exemple, pour indiquer à la fois que l'occupation de la queue est saturée et qu'une opération d'écriture PIO Store a été tentée sans succès sur cette queue. Le bit L désigne le dernier et seul message valide dans la queue. Lors de l'exécution d'une opération de lecture PIO Load pour faire l'opération DEQUEUE, le bit L change d'état, pour être mis à 1 par exemple, pour indiquer que c'est actuellement le dernier message valide dans la queue. Le module ISLy génère alors une interruption à la prochaine opération d'écriture PIO Store comme résultat de l'opération ENQUEUE sur cette queue. Comme règle générale pour minimiser le nombre d'interruptions, toute interruption est déclenchée à chaque fois qu'une opération d'écriture est exécutée dans une queue précédemment vide, tandis qu'aucune interruption n'est produite lorsque la queue contient déjà au moins un message. En réponse à une opération d'écriture PIO Store sur une queue, le champ MTAG du message est ignoré par le module ISLy ayant la queue.

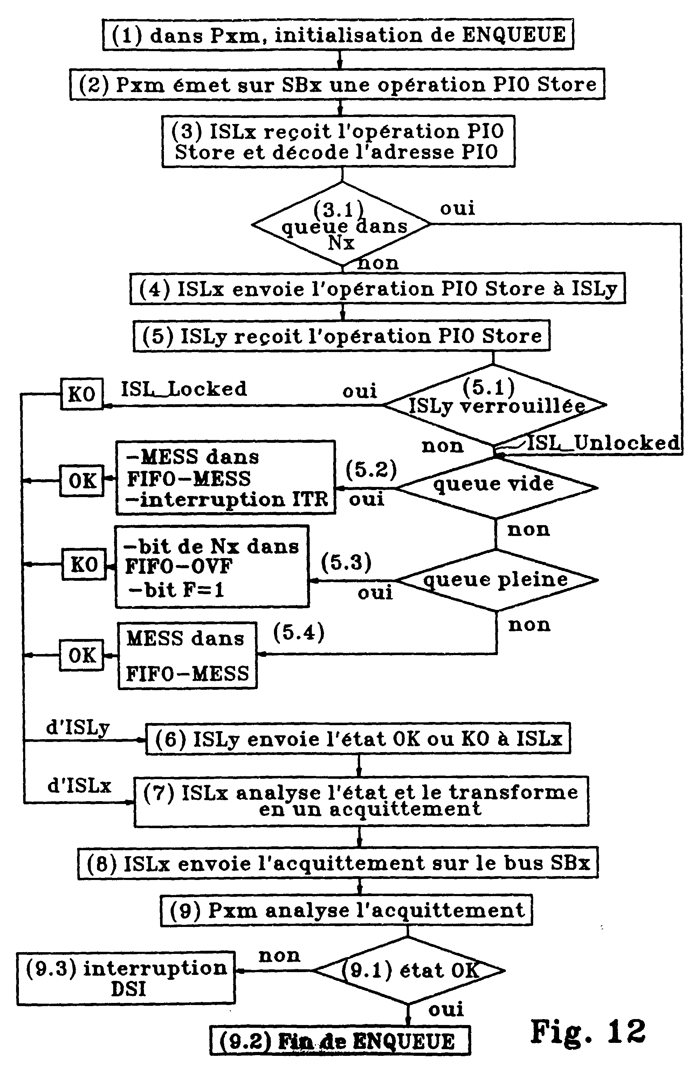

La figure 11 va servir de support pour la description d'un modèle de programmation relatif à l'entrée de messages dans une queue et à la sortie de messages d'une queue. L'organigramme de la figure 12 représente un algorithme de mise en queue de messages, dont les étapes sont les suivantes et leurs numéro d'ordre sont reportés dans la figure 11 aux endroits où elles se produisent, avec une brève indication de leur fonction.

(1 ) Un processeur Pxm du noeud Nx doit envoyer un message à un noeud Ny. Une macro-instruction de mise en queue ENQUEUE est initialisée (opération "début ENQUEUE" dans la figure 11) en impliquant trois paramètres : le message MESS à envoyer, un identificateur de queue QUEUE_ID et l'identificateur du noeud récepteur NODE_ID.

(2) La macro-instruction de mise en queue génère une instruction d'écriture STORE. Le processeur Pxm exécutant cette instruction fournit au bus une opération d'écriture PIO Store, qui est traitée par le module ISLx.

(3) Le module ISLx décode l'adresse PIO (opération "décodage adr." dans la figure 11) et cherche, à l'étape (3.1), si l'adresse se trouve ou non dans le noeud Nx. Si la queue est locale, rien n'est à envoyer sur la liaison Lxy et le module ISLx va tenter de le mettre dans la queue Qhp ou Qlp désignée. La macro-instruction ENQUEUE continue donc avec l'étape (5.2) ci-dessous. Si, par contre, la queue se trouve dans un noeud éloigné Ny, la macro-instruction continue comme suit.

(4) Le module ISLx envoie l'opération d'écriture PIO Store au module éloigné ISLy du noeud Ny par l'intermédiaire de la liaison Lxy (opération "envoi requête" dans la figure 11).

(5) A la réception par le module ISLy de l'opération d'écriture PIO Store, plusieurs cas peuvent se produire (regroupés sous l'opération "mise en queue" dans la figure 11).

(5.1) Le module ISLy vérifie si la queue est verrouillée. Si elle présente un état verrouillé ISL_Locked, il génère un état interne KO représentatif d'une requête insatisfaite et l'envoie au module ISLx. Sinon, le module ISLy présente un état non verrouillé ISL Unlocked et essaie d'écrire le message de la façon suivante. Cette façon serait aussi celle employée par le module ISLy pour écrire un message MESS émis par un processeur du noeud Ny. Trois cas peuvent se produire :

(5.2) Si la queue est vide, le module ISLy:

- met le message MESS dans le banc FIFO-MESS de la queue désignée Qhp ou Qlp,
- émet une interruption ITR vers le noeud Ny pour notifier la présence d'un message à traiter,
- et génère un état interne OK de réponse correcte.

(5.3) Si la queue spécifiée n'est pas vide, le module ISLy vérifie si au contraire elle est pleine. Si oui, le module :

- met dans le registre de débordement FIFO-OVF de la queue le bit correspondant au noeud émetteur Nx,
- change l'état, en le mettant par exemple à 1, du bit indicateur F du champ MTAG du premier message de la queue,

- et génère un état KO indiquant que la requête n'a pas été satisfaite.

(5.4) Si la queue n'est ni vide, ni pleine, le module ISLy :

- met le message dans le banc FIFO-MESS de la queue,
- et génère un état OK de requête satisfaite.

Dans ce cas par conséquent, aucune interruption ITR n'est émise dans le noeud Ny.

(6) Le module ISLy envoie en réponse l'état qu'il a précédemment généré (OK ou KO) au module ISLx par l'intermédiaire de la liaison Lxy (opération "état de réponse" dans la figure 11).

(7) Le module ISLx analyse l'état de la réponse du module ISLy ou de son propre module si la queue s'y trouve (opération "décodage état" dans la figure 11) et le transforme en un acquittement positif ou négatif pour l'opération PIO Store concernée.

(8) Le module ISLx envoie sur le bus système SBx acquittement positif ou négatif au processeur Pxm qui a émis l'opération initiale PIO Store (opération "acquittement" dans la figure 11).

(9) A l'étape (9), le processeur Pxm reçoit l'acquittement et vérifie à l'étape (9.1) s'il est positif ou négatif. S'il est positif, en l'étape (9.2), il termine la macro-instruction ENQUEUE, efface l'opération d'écriture PIO Store et continue à traiter les opérations suivantes. S'il est négatif, la requête n'a pas été satisfaite et sera traitée ultérieurement dans un processus de reprise après erreur. En bref, comme cela est connu, ce processus déclenche une interruption concernant le stockage de données DSI propre aux processeurs du type PowerPC (étape 9.3 de la figure 12 et opération "fin ENQUEUE ou traitement DSI" sur la figure 11). Si le processeur ou le système n'a pas la capacité de faire un traitement d'erreur automatique après avoir reçu un acquittement négatif, une solution parmi d'autres consiste à générer un acquittement toujours positif et de stocker dans un registre spécifique du module ISLx l'état négatif de acquittement, qui sera lu ultérieurement par une opération PIO Load sur ce registre.

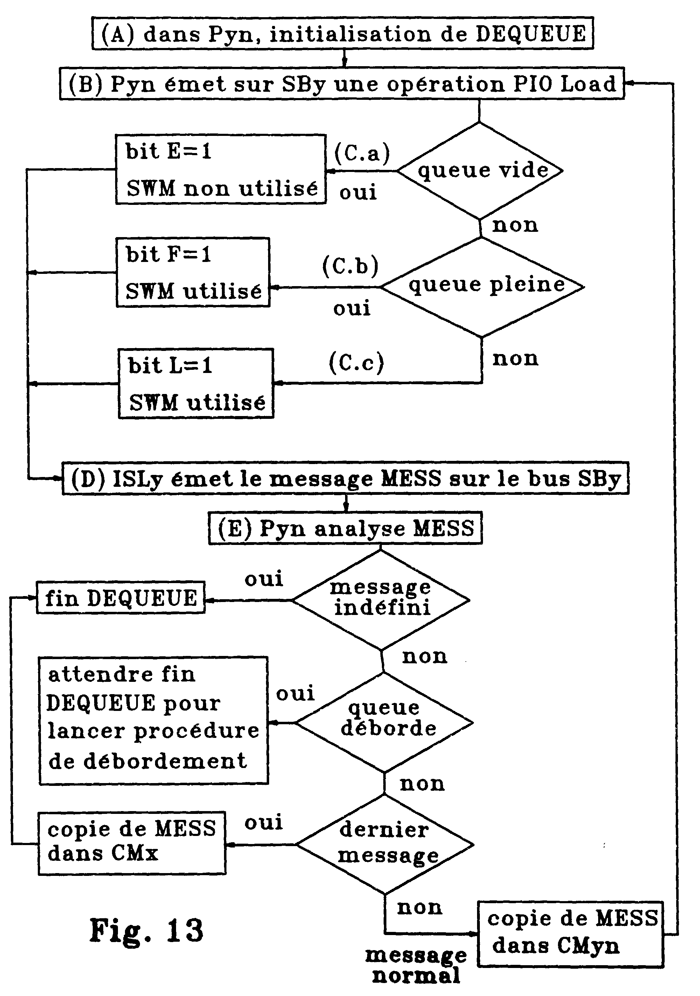

Un exemple de procédé de sortie et de traitement d'un message d'une queue du noeud Ny est décrit en référence aux figures 11 et 13.

(A) Un processeur Pyn est désigné par le circuit de gestion d'interruption CKT-ITR pour initialiser une macro-instruction de sortie de queue DEQUEUE (opération "début DEQUEUE" sur la figure 11) incluant, comme paramètre, l'identificateur de queue QUEUE_ID.

(B) La macro-instruction DEQUEUE débute par une instruction de lecture LOAD. Le processeur Pyn exécutant cette instruction émet sur le bus SBy une opération de lecture PIO Load, reçue et traitée par le module ISLy du noeud Ny.

(C) Le module lit le premier message de la queue. Le procédé choisi comme exemple effectue toujours une lecture des seize octets du message MESS à l'adresse FIFO-OUT du banc FIFO-MESS et fournit le champ MTAG représentatif de l'état de la queue. Plusieurs cas peuvent se produire, inclus dans l'opération "sortie de queue" de la figure 11.

(a) Si la queue est vide, c'est-à-dire si le banc FIFO-MESS a un contenu non représentatif d'un message MESS, le bit indicateur E du champ MTAG change d'état, pour prendre par exemple la valeur 1, et les autres bits indicateurs restent au niveau 0, ce qui signifie que le contenu du premier registre du banc FIFO-MESS n'a pas de sens. En pratique, les seize octets du message MESS de la queue sont lus, dans lequel le champ MTAG constitutif du premier octet indique qu'en réalité la queue est vide et, par conséquent, que les quinze octets SWM du message MESS sont indéfinis et ne sont pas utilisables par le logiciel.

(b) Si la queue est pleine et au moins un échec de mise en queue d'un message s'est produit, le bit F du champ MTAG du premier message de la queue a changé d'état et est mis par exemple au niveau 1 tandis que les autres bits du champ restent au niveau 0, de sorte que les quinze octets SWM du message MESS seront sortis de la queue et utilisés par le logiciel, qui est aussi informé du débordement.

(c) Si la queue n'est ni vide, ni pleine (cas normal), le message MESS est lu et ses quinze octets SWM seront utilisés par le logiciel. Tous les bits du champ MTAG sont au niveau 0, sauf si le message est le dernier de la queue (où le bit L = 1 et les autres bits restant à 0).

En résumé, le champ MTAG de l'exemple choisi doit avoir l'une des quatre configurations suivantes, toute autre configuration dénotant un dysfonctionnement du module ISL :

| E | F | L | |
|---|---|---|---|
| 0 | 0 | 0 | lecture normale de la queue : message normal. |
| 0 | 0 | 1 | dernier message. |
| 0 | 1 | 0 | message normal, mais la queue a débordé. |
| 1 | 0 | 0 | message indéfini. |

(D) Le module ISLy émet sur le bus système SBy un acquittement de l'opération PIO Load sous la forme des données du message MESS, de seize octets dans l'exemple choisi (opération "MESS" dans la figure 11).

(E) Le processeur Pyn reçoit l'acquittement et acquiert le contenu du message. Il en analyse le contenu du champ MTAG. Si le message est indéfini, la queue était vide et l'opération DEQUEUE est terminée. Si c'est le dernier message qui attend dans la queue, le processeur peut le traiter ou le stocker et l'opération DEQUEUE est terminée. Si la queue a débordé, une macro-instruction de traitement de débordement pourra être démarrée lorsque l'opération DEQUEUE sera terminée. Le processeur Pyn peut donc traiter le message valide qui sort des tests précédents, ou le stocker dans son antémémoire CMyn, et lit le message suivant en retournant à l'étape (B). L'étape E constitue l'opération "fin DEQUEUE" sur la figure 11.

La partie matérielle servant à la mise en oeuvre des deux macro-instructions ENQUEUE et DEQUEUE, et représentée schématiquement sur la figure 9, va maintenant être décrite plus en détail comme exemple illustratif de mise en oeuvre.

La figure 9 illustre aussi un exemple de format du registre de débordement FIFO-OVF. Le registre FIFO-OVF est mappé dans l'espace local LSP de l'espace d'adressage ISLIO. Dans une queue, ce registre est associé au banc FIFO-MESS et se trouve dans le module ISL incorporant cette queue A chaque noeud du système est attribué un bit d'identification. Comme indiqué à la figure 9, le registre FIFO-OVF a une longueur de seize octets, de sorte que le système peut avoir au maximum 128 noeuds. Ainsi, lorsqu'un message MESS émanant d'un noeud Nx trouve le banc FIFO-MESS plein, le module ISLy récepteur élève au niveau 1 le bit d'identification du noeud émetteur Nx dans le registre FIFO-OVF. Le contenu du registre FIFO-OVF représente donc les noeuds dont les messages respectifs ont été refusés depuis la dernière lecture du registre FIFO-MESS.

Lorsqu'un noeud Ny lit dans une queue un message MESS dans lequel le bit F indique un débordement, il peut se référer au registre FIFO-OVF pour savoir quels sont les noeuds émetteurs qui ont subi un échec d'écriture dans la queue à cause d'une saturation. Quand la queue ne sera plus pleine, le noeud récepteur Ny pourra alors leur envoyer un message indiquant un changement d'état du registre FIFO-MESS, de sorte que les noeuds émetteurs pourront retourner chacun leur message MESS. L'opération PIO Load à l'adresse du registre FIFO-OVF est une opération de lecture et de remise à zéro du contenu de ce registre.

Le registre d'interruption FIFO-ITR est mappé dans l'espace local LSP de l'espace ISLIO. Une opération d'écriture PIO Store à l'adresse du registre remet à zéro la source d'interruption, quelle que soit la valeur des données.

La description de l'exemple du procédé de transfert internodal de messages fait clairement ressortir que l'homme du métier peut y apporter de nombreuses variantes. Les noeuds peuvent avoir un nombre quelconque et différent de processeurs. De même, bien que les noeuds décrits ont chacun leur propre système d'exploitation, tous les noeuds, ou une partie d'entre eux, ou aucun d'eux pourraient partager le même système d'exploitation. En outre, les processeurs pourraient ne pas avoir d'antémémoires respectives, ou avoir une hiérarchie supérieure à celle décrite. D'autre part, certains noeuds peuvent ne pas avoir de sous-système d'entrée-sortie IOS.

D'une manière générale, on peut donc dire que l'invention a pour objet un procédé de transmission d'un message MESS dans un système informatique SYS comprenant des processeurs Pxm, Pyn répartis dans au moins un premier noeud Nx et un second noeud Ny ayant chacun un module de communication ISL avec un autre noeud par l'intermédiaire d'une liaison de transmission Lxy. Le message, qui a une taille prédéterminée, est émis par un processeur Pxm du premier noeud Nx sous la forme d'une opération d'écriture PIO Store dans le module de communication ISLx du premier noeud et est transmis, par l'intermédiaire de la liaison de communication Lxy, au module de communication ISLy du second noeud où il est rangé dans une queue de messages reçus Qhp, Qlp, dans l'ordre de leur réception. Un processeur du noeud Ny incorporant la queue sort le message de la queue sous la forme d'une opération de lecture PIO Load dans le module de communication ISLy de ce noeud en vue de traiter l'information SWM contenue dans le message, les opérations d'entrée et de sortie de la queue étant faites séquentiellement.

Le transfert des messages est donc commandé par les opérations d'écriture PIO Store et de lecture PIO Load. Il en résulte un transfert simple et rapide. Leur réception dans une queue et les opérations de lecture et d'écriture successives assurent la sécurité des informations contenues dans chaque message transféré. Et la mise en queue dans l'ordre des messages reçus assure l'ordonnancement des messages.

On a vu que le message émis par le processeur Pxm du premier noeud peut être destiné à ce noeud, où il est rangé dans la queue de messages reçus, dans l'ordre de leur réception et sorti de la même façon que précédemment, par le processeur Pxm ou un autre du noeud. Cette possibilité est surtout avantageuse pour tester à l'usine la validité du procédé de l'invention, sans avoir à connecter le noeud fabriqué à un autre noeud.

Dans l'exemple décrit, la taille de la queue étant limitée, le module de communication Ny incorporant la queue envoie au module de communication ISLx du premier noeud une réponse qui spécifie si le message a été rangé dans la queue ou non. Appliquée au cas précédent, la réponse est renvoyée au module ISLx. Cette caractéristique accessoire a pour avantage de contrôler le flux des messages reçus.

Dans l'exemple illustré, l'état présent de la queue est obtenu du champ MTAG du message par le processeur qui sort le message de la queue. D'autres possibilités existent. Celle décrite est simple et efficace et laisse place facilement à d'autres informations représentatives de l'état de la queue. Dans l'exemple décrit, le bit E, représentatif d'un état vide de la queue, spécifie que le contenu du message lu est invalide. Le bit F, représentatif d'un état de débordement de la queue, indique que, la queue étant pleine, au moins un message reçu a été rejeté. Et le bit L indique que le message sorti est le dernier message présent dans la queue.

D'une manière générale aussi, chaque arrivée d'un message dans une queue pourrait être notifiée par une interruption du fonctionnement d'un processeur du noeud. Mais ces interruptions ralentissent beaucoup le traitement des données dans le noeud. Dans l'exemple illustré, un processeur du noeud incorporant la queue est notifié, par une interruption, de l'arrivée d'un message, seulement lorsque la queue étant vide, elle reçoit un message, de sorte que l'interruption vaut pour tous les messages qui suivent le premier message, jusqu'à l'exécution de l'opération DEQUEUE. Ceci se traduit par un gain notable de la performance de traitement du noeud. En variante, on pourrait aussi lire à des périodes régulières ce que contient une queue. L'état de la queue pourrait donc être fourni autrement que d'un champ du message. L'invention permet s'adapte donc à toutes les conditions désirées de fonctionnement des noeuds.

Il en résulte un système informatique SYS comprenant des processeurs Pxm, Pyn répartis dans au moins un premier noeud Nx et un second noeud Ny ayant chacun un module de communication ISL avec un autre noeud par l'intermédiaire d'une liaison de transmission Lxy et mettant en oeuvre le procédé de transfert d'un message, tel que défini précédemment.

La mise en oeuvre matérielle du procédé peut se faire de diverses façons. Dans l'exemple illustré, la queue est constituée par un banc de registres FIFO-MESS ayant une première adresse FIFO-IN pour effectuer des opérations de mise en queue du message et une seconde adresse FIFO-OUT pour effectuer des opérations de sortie du message de la queue. Bien que chaque noeud peut n'avoir qu'une queue, chaque noeud peut contenir plusieurs queues de réception correspondant à des priorités différentes spécifiées chacune par lesdites première et seconde adresses. Dans l'exemple illustré, ces deux adresses sont, indépendamment de leur ordre, respectivement contenues dans un espace global GSP et dans un espace local LSP de l'espace d'adressage d'entrée-sortie ISLIO relatif aux registres que contiennent les modules desdits noeuds.

Une caractéristique facultative mais avantageuse du procédé consiste en ce que chaque module de communication ISL illustré inclut un registre de débordement FIFO-OVF indiquant l'identité du ou des noeuds dont au moins un message a été rejeté du fait que la queue était pleine. Selon une autre caractéristique facultative et avantageuse, l'arrivée d'un message est notifiée par une interruption d'un processeur du second noeud, l'interruption étant commandée par un bit associé à la queue dans un registre d'interruption FIFO-ITR inclus dans le module de communication, le bit ayant une première valeur lorsqu'un message est rangé dans une queue vide et ayant une seconde valeur par une opération d'écriture à l'adresse de ce registre.

## 4. Procédé de communication de données par transfert de messages

La mise en oeuvre combinée du procédé de transfert d'un message de taille prédéterminée avec le procédé de transfert de données décrit précédemment permet de décrire un procédé de communication de données par transfert de messages. On suppose dans ce cas que le noeud Ny veut transférer des données, contenues dans une aire de données en mémoire du noeud Ny, dans une aire de données en mémoire d'un autre noeud Nx. Les informations permettant de gérer le transfert des données sont échangées entre les noeuds Nx et Ny au moyen du procédé de transfert de messages de taille prédéterminée, qui sont dans ce chapitre des messages de commande. Dans le chapitre précédent, les messages de taille prédéterminée pouvaient servir aussi bien à l'envoi de commandes qu'à l'envoi de données. On distinguera dans ce chapitre entre les messages de données à transférer du noeud Ny vers le noeud Nx, ces messages pouvant donc avoir une taille quelconque, et les messages de commande, dont la taille est prédéterminée.

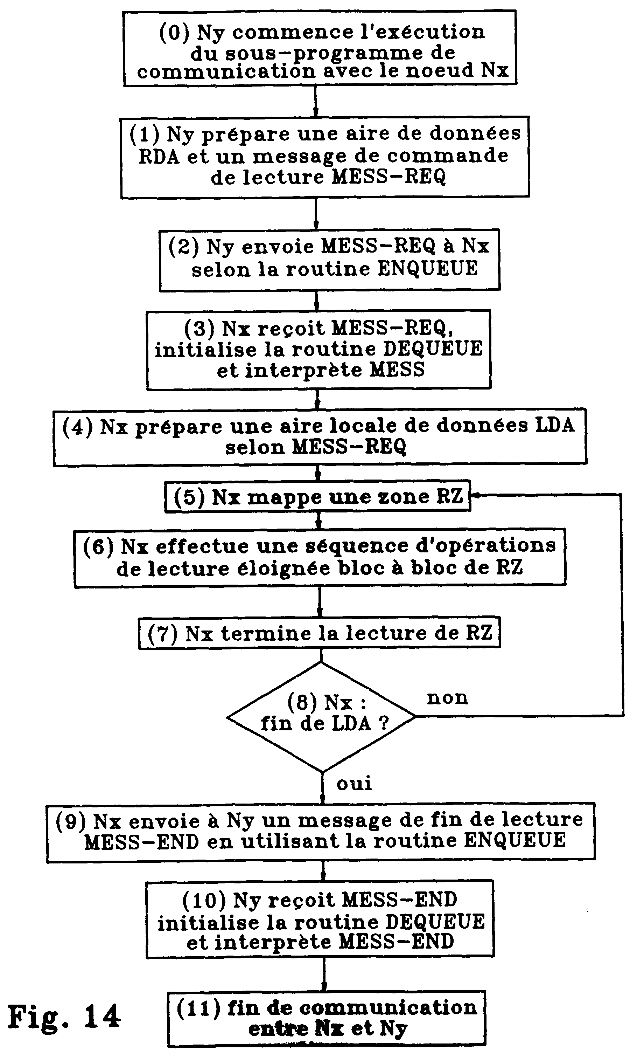

La figure 14 est un organigramme illustrant un exemple de la mise en oeuvre du procédé de communication de données, par transfert de messages, entre le noeud émetteur Ny et le noeud récepteur Nx.

A l'étape (0) de l'organigramme de la figure 14, le programme qui s'exécute dans le noeud Ny commence par l'exécution d'un sous-programme de communication avec le noeud Nx.

A l'étape (1), le noeud Ny prépare une aire de données RDA qui, pour le noeud Nx est une aire de données éloignée. Le système d'exploitation du noeud Ny:

- alloue des tampons pour contenir l'aire RDA, un tampon étant ici une zone d'adresses mémoire,
- met à jour les données à transférer, en écrivant le message de données dans l'aire RDA,
- marque les tampons pour qu'ils restent en mémoire,
- prépare un message de commande de lecture MESS-REQ pour notifier au noeud Nx qu'il doit faire une lecture éloignée sur les tampons contenant l'aire RDA identifiée par ses caractéristiques (adresse réelle, taille, etc.).

A l'étape (2), le noeud Ny envoie le message de commande de lecture MESS-REQ au noeud Nx en utilisant la routine ENQUEUE de mise en queue de message.

A l'étape (3), le message MESS-REQ est mis en queue dans le module ISLx du noeud Nx. Si, comme dans l'exemple décrit dans le chapitre précédent, la queue était vide, le circuit d'interruption CKT-ITR émet un signal d'interruption pour qu'un processeur du noeud Nx interrompe son fonctionnement et initialise la routine de sortie de queue DEQUEUE. Dans tous les cas, le message de commande de lecture MESS-REQ est sorti, lu et interprété.

En réponse, à l'étape (4), le noeud Nx prépare une aire de données locale LDA pour recevoir les données. Par conséquent,

- il alloue des tampons constitutifs de l'aire locale LDA, ayant les caractéristiques définies par le message de commande de lecture MESS-REQ ou, plus généralement, tenant compte de ces caractéristiques,
- et invalide les entrées d'antémémoire relatives aux blocs composant l'aire locale LDA.

A l'étape (5) commence le transfert des données. Dans le contexte de l'exemple illustré, le transfert est évidemment fait selon le procédé décrit dans le chapitre 2 précédent. Par conséquent, le noeud Nx mappe la première zone de données éloignée RZO dans une entrée de la table RMTx par l'opération MAP, en:

- sélectionnant une entrée libre de la table pour y ouvrir une fenêtre W, et
- initialisant une entrée de la table RMTx de façon à mapper l'adresse réelle de la zone locale LZ0 dans le noeud Nx avec l'adresse réelle de la zone RZ0 dans le noeud Ny.

A l'étape (6), le noeud Nx effectue une séquence d'opérations de lecture éloignée des blocs constituant la zone RZ0 contenue dans les tampons du noeud Ny. En cas de transaction anormale, une erreur est enregistrée dans le champ d'état ST de l'entrée correspondante de la table RMT.

A l'étape (7), le noeud Nx termine la séquence de transfert des données de la zone RZ0 par une opération UNMAP, qui retourne le champ d'état ST (condition d'erreur) et libère l'entrée correspondante de la table RMT.

A l'étape (8), le noeud Nx vérifie s'il a reçu toute l'aire locale de données LDA. Ceci n'étant pas le cas de l'exemple considéré, le noeud Nx mappe la zone suivante RZ1 dans les mêmes conditions qu'à l'étape (5) et effectue ensuite les étapes (6), (7) et (8). Le cycle continue jusqu'à la dernière zone RZ4, où Nx a obtenu toutes les données demandées.

A l'étape (9), le noeud Nx envoie à Ny un message de commande de fin de lecture MESS-END en utilisant la routine ENQUEUE.

A l'étape (10), le message de commande de fin de lecture MESS-END est mis en queue dans le module ISLy du noeud Ny où, selon les cas décrits au chapitre précédent, le circuit d'interruption CKT-ITR émet un signal d'interruption pour qu'un processeur du noeud Ny interrompe son fonctionnement et initialise la routine de sortie de queue DEQUEUE. Dans tous les cas, le message MESS-END est sorti, lu et interprété.

L'étape (11) marque la fin de la communication entre les noeuds Nx et Ny. Les tampons du noeud Ny contenant RDA sont alors désalloués.

Une variante de ce procédé existe dans le cas où une fenêtre ou plusieurs fenêtres sont ouvertes en permanence. Dans ce cas, les tampons du noeud Ny sont alloués en permanence. Ceci détermine une taille maximale des messages de données à transférer. L'opération MAP de l'étape (5) n'est pas nécessaire, à l'étape (7) l'opération GET-STATUS est employée, et à l'étape (11) les tampons du noeud Ny ne sont pas désalloués, mais mis en attente pour une utilisation ultérieure.

Bien entendu, d'autres variantes sont possibles. Notamment, l'exemple illustré met bien en relief que le transfert de données peut être fait selon un autre mode que celui décrit dans le chapitre 2 précédent, qui procure de nombreux avantages. De même, les messages de commande MESS-REQ et MESS-END peuvent être transmis autrement que par le procédé décrit dans le chapitre 3, qui utilise des queues.

D'une manière générale, l'invention décrite dans ce chapitre a pour objet un procédé de communication de données entre noeuds d'un système informatique, chaque noeud Nx, Ny comprenant au moins un processeur Pxm, Pyn, au moins une mémoire Mx, My et un module de communication ISLx, ISLy avec un autre noeud par l'intermédiaire d'une liaison de communication Lxy. Un premier noeud Ny voulant envoyer des données à un second noeud Nx, le premier noeud prépare une aire RDA pour contenir lesdites données et envoie au module de communication ISLx du second noeud un message de commande de lecture MESS-REQ pour lui notifier les caractéristiques de l'aire et qu'il doit faire une lecture éloignée de cette aire. En réponse, le second noeud Nx prépare une aire locale de données LDA prenant en compte lesdites caractéristiques, effectue la lecture éloignée de l'aire RDA et envoie au premier noeud Ny un message de commande de fin de lecture MESS-END.

On a vu que l'aire RDA peut avoir une taille quelconque ou une taille maximale. La taille pourrait aussi être définie à l'avenir. Quand elle a une taille quelconque, elle est avantageusement contenue selon l'exemple illustré dans des zones d'adresses mémoire appelées tampons. Les tampons peuvent être disjoints.

Dans l'exemple illustré également, le message de commande de lecture MESS-REQ contient la liste des adresses et des tailles des tampons constituant l'aire de données RDA. Cependant, selon une variante possible, on pourrait faire en sorte que le message de commande de lecture MESS-REQ contient l'adresse et la taille d'un tampon de référence contenant la liste des adresses et des tailles des tampons constituant l'aire de données RDA.

Le message de commande de fin de lecture MESS-END a de nombreux avantages. D'abord, en signalant au premier noeud Ny la fin de la lecture, ce noeud peut régler le flux de transfert des données qu'il a à envoyer au second noeud Nx. On évite ainsi la saturation du noeud récepteur. Selon deux caractéristiques facultatives mais intéressantes qui ont été décrites, le message de commande de fin de lecture MESS-END commande la désallocation des tampons ou leur mise en attente, et il notifie en plus l'état du transfert des données. De préférence, en cas d'erreur, il notifiera aussi le type d'erreur. Ces caractéristiques offrent l'avantage d'assurer l'intégrité du message de données transféré. En cas d'erreur, le procédé peut être repris à l'étape intermédiaire relative à l'envoi du message de commande de lecture MESS-REQ, puisque les zones tampons restent allouées ou disponibles. En outre, en étant informé du type d'erreur, le noeud peut décider selon le type d'erreur de ne pas renvoyer le message de données et d'informer le gestionnaire du noeud qu'un problème doit être résolu pour transmettre correctement les données désirées.

On a vu aussi précédemment que le transfert de données peut être fait selon divers procédés connus et que, dans l'exemple illustré, la lecture éloignée comprend une séquence d'opérations de lecture éloignée pour lire bloc après bloc l'aire de données RDA et est faite selon le procédé décrit dans le chapitre 2 précédent. Ce procédé peut être résumé en disant que l'aire de données RDA comprenant au moins une zone de données RZ0-RZ4, une opération de lecture éloignée d'une zone de données par le second noeud Nx consiste à ouvrir une fenêtre W de correspondance entre les mémoires des deux noeuds et à utiliser dans le module de communication ISLx du second noeud Nx une table de correspondance RMTx entre l'adresse réelle d'une zone de données locale LDA dans le second noeud avec l'adresse réelle de la zone de données RDA du premier noeud Ny de façon à transformer la lecture des blocs de l'aire locale de données LDA en lecture de blocs de l'aire de données RDA. L'entrée IN-RMT de cette table est initialisée grâce auxdites caractéristiques fournies par le message de commande de lecture MESS-REQ. Cette opération de lecture éloignée est répétée jusqu'à épuisement des zones constitutives de l'aire de données. Dans le cas de fenêtres ouvertes en permanence, on peut alors dire que l'aire de données RDA comprenant au moins une zone de données RZ0-RZ4, une opération de lecture éloignée d'une zone de données par le second noeud Nx consiste à avoir une fenêtre de correspondance W ouverte en permanence entre les mémoires des deux noeuds et à utiliser dans le module de communication ISLx du second noeud une table de correspondance RMTx entre l'adresse réelle d'une zone de données locale LDA dans le second noeud avec l'adresse réelle de la zone de données RDA du premier noeud Ny de façon à transformer la lecture des blocs de l'aire locale de données LDA en lecture de blocs de l'aire de données RDA. La fenêtre étant ouverte en permanence, l'entrée IN-RMT de cette table a donc été initialisée antérieurement à l'arrivée du message de commande de lecture. Cette opération de lecture éloignée est bien sûr répétée jusqu'à épuisement des zones constitutives de l'aire de données RDA. De préférence aussi, les opérations de lecture des blocs de l'aire locale de données LDA sont exécutées par un processeur du second noeud, le module de communication de ce noeud se comportant comme une antémémoire d'un processeur virtuel de ce noeud.

Enfin, selon l'option mise en oeuvre dans l'exemple de la figure 14, le message de commande de lecture MESS-REQ et le message de commande de fin de lecture MESS-END qui sont reçus par les noeuds respectifs sont mis dans des queues de messages Qhp, Qlp incluses dans les modules de communication des noeuds respectifs ISLx, ISLy, où ils sont lus par un processeur du noeud correspondant.

Il en résulte un système informatique SYS comprenant des processeurs Pxm, Pyn répartis dans au moins deux noeuds Nx, Ny comprenant au moins une mémoire et un module de communication avec l'autre noeud, les deux noeuds mettant en oeuvre le procédé défini précédemment. Il suffit normalement de la mémoire Mx, My dans chaque noeud. Cependant, on a vu que la mise en oeuvre du procédé de transfert de données décrit dans le chapitre 2 nécessite la présence d'au moins une antémémoire. De même, comme dans les procédés décrits précédemment, le procédé de communication de données par transfert de messages convient à tout système, les noeuds pouvant avoir un nombre quelconque et différent de processeurs. De même, bien que les noeuds décrits ont chacun leur propre système d'exploitation, tous les noeuds, ou une partie d'entre eux, ou aucun d'eux pourraient partager le même système d'exploitation.

**EP 0 755 014 A1**

**Revendications**

1.  Procédé de transfert de données entre noeuds d'un système informatique, chaque noeud (Nx) comprenant au moins un processeur (Pxm) pourvu d'une antémémoire (CMxm), une mémoire (Mx), un bus système (SBx) et un module de communication (ISLx) avec un autre noeud (Ny), la gestion des données dans chaque noeud se faisant selon un protocole de cohérence (MESI) des mémoires du noeud, caractérisé en ce qu'il utilise un mécanisme de ce protocole pour le transfert des données d'un premier noeud (Nx) dans un second noeud (Ny).

2.  Procédé selon la revendication 1, caractérisé en ce que, dans le premier noeud (Nx), il consiste à utiliser l'interface interne du module (ISLx) avec le bus système (SBx) comme si l'interface était celle d'une antémémoire possédant l'unique copie à jour dans ce noeud d'un bloc de données (LB) de ce noeud et la fournissant en réponse à la requête d'une antémémoire (CMxm) de ce noeud.

3.  Procédé selon la revendication 2, caractérisé en ce qu'il consiste à transformer ladite requête en une requête concernant le second noeud (Ny) et à la transférer du premier noeud au second noeud (Ny) pour l'acquisition d'une copie d'un bloc de données (RB) du second noeud, à transférer cette copie du bloc de données (RB) du second noeud (Ny) au premier noeud (Nx), et à la présenter comme la copie unique à jour demandée par le module du premier noeud (Nx).

4.  Procédé selon la revendication 3, caractérisé en ce qu'il consiste à utiliser dans le second noeud l'interface intarne du module (ISLy) avec le bus système (SBy) comme celle d'une antémémoire (CMy) voulant acquérir une copie dans ce noeud d'un bloc de données (RB) de ce noeud.

5.  Procédé selon la revendication 3, caractérisé en ce qu'il consiste à acquérir une copie du second noeud (Ny) par un accès direct (DMA) en la mémoire (My) de ce noeud.

6.  Procédé selon la revendication 3, caractérisé en ce qu'il consiste à utiliser dans le premier noeud (Nx) une table de correspondance (RMTx) pour reconnaître et transformer ladite requête en une requête concernant le second noeud (Ny).

7.  Procédé selon la revendication 6, caractérisé en ce que chaque entrée de la table définit une fenêtre de correspondance (W) entre une partie continue d'adressage des mémoires du premier noeud (Nx) et une partie continue d'adressage des mémoires d'un autre noeud et en ce que la reconnaissance de la requête se fait par l'adresse de la requête.

8.  Procédé selon la revendication 7, caractérisé en ce qu'il consiste à écrire (MAP) le contenu relatif à chaque entrée de la table pour ouvrir la fenêtre et établir ainsi la correspondance entre lesdites requêtes.

9.  Procédé selon la revendication 6 ou 7, caractérisé en ce qu'il consiste à lire (UNMAP) le contenu relatif à chaque entrée de la table pour fermer la fenêtre et invalider ainsi cette correspondance.

10. Procédé selon la revendication 3 ou 6, caractérisé en ce que si le transfert de la requête ou de ladite copie présente un défaut, il consiste à inscrire le type du défaut dans le contenu de l'entrée (IN-RMT) de la table qui correspond à ladite requête et à rendre ce contenu accessible en lecture (UNMAP ou GET-STATUS).

11. Procédé selon la revendication 7, caractérisé en ce qu'il consiste à laisser la fenêtre ouverte en permanence et à pratiquer des transferts successifs aux mêmes adresses.

12. Système informatique (SYS) comprenant des processeurs (Pxm, Pyn) pourvus d'antémémoires respectives (CMxm, CMyn) et répartis dans au moins deux noeuds (Nx, Ny) comprenant chacun une mémoire (M), un bus système (SB) et un module de communication (ISL) avec un autre noeud, caractérisé en ce que le module de communication met en oeuvre le procédé défini par l'une des revendications 1 à 11.

13. Système selon la revendication 12, caractérisé en ce que chaque noeud a son propre système d'exploitation.

14. Circuit intégré, caractérisé en ce qu'il incorpore un module de communication (ISL) pour la mise en oeuvre du procédé défini par l'une des revendications 1 à 11.

Fig. 1

EP 0 755 014 A1

Fig. 2

$$LB-add = Add \cap \overline{MSK}$$

$$Add'=(Add \cap MSK) \cup RB-add$$

Fig. 3

Fig. 5

Fig. 7

SYS

LSPx

LSP

MSx

SBx

GSPx

GSP

LSPy

GSPx

MSy

SBy

ISLx

GSPy

GSPy

ISLy

GSPy

ISLIO

Ny

Nx

**Fig. 4**

Nx                    Ny

(1) début ENQUEUE                              (A) début DEQUEUE

(9) fin ENQUEUE ou          Pxm      Pyn       (E) fin DEQUEUE
traitement DSI

(2) PIO Store              SBx      SBy        (B) PIO Load

(8) acquittement           ISLx     ISLy       (D) MESS

(3) décodage adr.    (4) envoi requête          (C) sortie de queue

(7) décodage état    (6) état de réponse        (5) mise en queue

Lxy

**Fig. 11**

```
┌──────────┐
│  début   │
└──────────┘
     │
     ▼
┌──────────────────────────────────────┐
│  (1) Requête de Pxm :                 │
│  lire les données à l'adresse Addi    │
└──────────────────────────────────────┘
     │
     ▼
┌──────────────────────────────────────────┐
│  (2) Requête de CMxm :                    │
│  lire le bloc LB contenant l'adresse Addi │
└──────────────────────────────────────────┘
     │
     ▼
                  ◇ (3)
                  ISLx :
┌────────────────────┐  oui    Addi dans
│ (4) Lecture dans Nx │◄──────    Nx?
│     du bloc LB      │
└────────────────────┘
                     │ non
                     ▼
┌──────────────────────────────────────────┐
│  (4*) ISLx : déclenchement d'une          │
│  procédure de lecture éloignée            │
└──────────────────────────────────────────┘
     │
     ▼
┌──────────────────────────────────────────┐
│  (5) RMTx :                               │
│  LB(Nx, Addi)=RB(Ny, Addj)                │
└──────────────────────────────────────────┘
     │
     ▼
┌──────────────────────────────────────────┐
│  (6) de ISLx à ISLy : lire le bloc RB     │
└──────────────────────────────────────────┘
     │
     ▼
┌──────────────────────────────────────────┐
│  (7) De ISLy sur SBy : lire le bloc RB    │
└──────────────────────────────────────────┘
     │
     ▼
┌──────────────────────────────────────────┐
│  (8) Ecriture dans ISLy du bloc RB        │
└──────────────────────────────────────────┘
     │
     ▼
┌──────────────────────────────────────────┐
│  (9) Transmission du bloc RB de ISLy à ISLx, │
│  où RB est reconnu comme étant LB         │
└──────────────────────────────────────────┘
     │
     ▼
┌──────────────────────────────────────────┐
│  (10) Transmission du bloc RB             │
│  de ISLx à Pxm et Mx                      │
└──────────────────────────────────────────┘
     │
     ▼
┌──────────┐
│   Fin    │
└──────────┘
```

**Fig. 6**

Fig. 8

**Fig. 9**

**Fig. 10**

EP 0 755 014 A1

(1) dans Pxm, initialisation de ENQUEUE

(2) Pxm émet sur SBx une opération PIO Store

(3) ISLx reçoit l'opération PIO Store et décode l'adresse PIO

(3.1) queue dans Nx — oui / non

(4) ISLx envoie l'opération PIO Store à ISLy

(5) ISLy reçoit l'opération PIO Store

(5.1) ISLy verrouillée — oui / non

KO — ISL_Locked

ISL_Unlocked

(5.2) queue vide — oui / non

OK — −MESS dans FIFO−MESS −interruption ITR

(5.3) queue pleine — oui / non

KO — −bit de Nx dans FIFO−OVF −bit F=1

(5.4)

OK — MESS dans FIFO−MESS

d'ISLy

(6) ISLy envoie l'état OK ou KO à ISLx

d'ISLx

(7) ISLx analyse l'état et le transforme en un acquittement

(8) ISLx envoie l'acquittement sur le bus SBx

(9) Pxm analyse l'acquittement

(9.3) interruption DSI — non

(9.1) état OK — oui

(9.2) Fin de ENQUEUE

Fig. 12

(A) dans Pyn, initialisation de DEQUEUE

(B) Pyn émet sur SBy une opération PIO Load

bit E=1
SWM non utilisé

(C.a) — oui — queue vide

non

bit F=1
SWM utilisé

(C.b) — oui — queue pleine

non

bit L=1
SWM utilisé

(C.c)

(D) ISLy émet le message MESS sur le bus SBy

(E) Pyn analyse MESS

fin DEQUEUE — oui — message indéfini

non

attendre fin DEQUEUE pour lancer procédure de débordement

oui — queue déborde

non

copie de MESS dans CMx

oui — dernier message

non

message normal

copie de MESS dans CMyn

**Fig. 13**

(0) Ny commence l'exécution
du sous-programme de
communication avec le noeud Nx

(1) Ny prépare une aire de données
RDA et un message de commande
de lecture MESS-REQ

(2) Ny envoie MESS-REQ à Nx
selon la routine ENQUEUE

(3) Nx reçoit MESS-REQ,
initialise la routine DEQUEUE
et interprète MESS

(4) Nx prépare une aire locale de données LDA
selon MESS-REQ

(5) Nx mappe une zone RZ

(6) Nx effectue une séquence d'opérations
de lecture éloignée bloc à bloc de RZ

(7) Nx termine la lecture de RZ

(8) Nx :
fin de LDA ?          non

oui

(9) Nx envoie à Ny un message de fin de lecture
MESS-END en utilisant la routine ENQUEUE

(10) Ny reçoit MESS-END
initialise la routine DEQUEUE
et interprète MESS-END

Fig. 14          (11) fin de communication
entre Nx et Ny

| | Office européen des brevets | **RAPPORT DE RECHERCHE EUROPEENNE** | Numero de la demande EP 96 40 1528 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DIGEST OF PAPERS. COMPCON SPRING 1992. THIRTY-SEVENTH IEEE COMPUTER SOCIETY INTERNATIONAL CONFERENCE (CAT. NO.92CH3098-1), SAN FRANCISCO, CA, USA, 24-28 FEB. 1992, ISBN 0-8186-2655-0, 1992, LOS ALAMITOS, CA, USA, IEEE COMPUT. SOC. PRESS, USA, pages 338-343, XP002011855 GOLBERT A ET AL: "A second level multiprocessing cache for the i486DX and i860XP processors" | 1 | G06F15/16 |
| A | * page 338, colonne de gauche, ligne 1 - page 342, colonne de gauche, ligne 5; figures 1-7 *<br>--- | 2-14 | |
| A | CONFERENCE PROCEEDINGS OF THE 1995 IEEE FOURTEENTH ANNUAL INTERNATIONAL PHOENIX CONFERENCE ON COMPUTERS AND COMMUNICATIONS (CAT. NO.95CH35751), SCOTTSDALE, AZ, USA, 28-31 MARCH 1995, ISBN 0-7803-2492-7, 1995, NEW YORK, NY, USA, IEEE, USA, pages 383-388, XP002011856 CAI G Z N: "Architectural and multiprocessor design verification of the PowerPC 604 data cache" * le document en entier *<br>--- | 1-14 | DOMAINES TECHNIQUES RECHERCHES (Int.Cl.6)<br><br>G06F |
| A | DIGEST OF PAPERS. COMPCON'95. TECHNOLOGIES FOR THE INFORMATION SUPERHIGHWAY, SAN FRANCISCO, CA, USA, 5-9 MARCH 1995, ISBN 0-8186-7029-0, 1995, LOS ALAMITOS, CA, USA, IEEE COMPUT. SOC. PRESS, USA, pages 292-299, XP002011857 ALLEN M S ET AL: "A pipelined, weakly ordered bus for multiprocessing systems" * page 296, colonne de gauche, ligne 13 - page 298, colonne de gauche, ligne 17 *<br>---<br>-/-- | 1-14 | |

Le présent rapport a été établi pour toutes les revendications

| Lieu de la recherche | Date d'achèvement de la recherche | Examinateur |
|---|---|---|
| LA HAYE | 28 Août 1996 | Schenkels, P |

EPO FORM 1503 03.82 (P04C02)

## RAPPORT DE RECHERCHE EUROPEENNE

Numero de la demande

EP 96 40 1528

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE MICRO,<br>vol. 14, no. 6, 1 Décembre 1994,<br>pages 61-66, XP000483626<br>TOMASEVIC M ET AL: "HARDWARE APPROACHES TO CACHE COHERENCE IN SHARED-MEMORY MULTIPROCESSORS, PART 2"<br>* le document en entier *<br>--- | 1-14 | |
| A | ACM SIGPLAN NOTICES,<br>vol. 29, no. 11, 1 Novembre 1994,<br>pages 219-229, XP000491736<br>WOO S C ET AL: "THE PERFORMANCE ADVANTAGES OF INTEGRATING BLOCK DATA TRANSFER IN CACHE-COHERENT MULTIPROCESSORS"<br>* page 219, colonne de gauche, ligne 1 - page 221, colonne de droite, ligne 11; figure 1 *<br>----- | 1-14 | |

**DOMAINES TECHNIQUES RECHERCHES (Int.Cl.6)**

Le présent rapport a été établi pour toutes les revendications

| Lieu de la recherche | Date d'achèvement de la recherche | Examinateur |
|---|---|---|
| LA HAYE | 28 Août 1996 | Schenkels, P |